(19) **Europäisches Patentamt / European Patent Office / Office européen des brevets**

(11) **EP 3 721 022 B1**

(12) **FASCICULE DE BREVET EUROPEEN**

(45) Date de publication et mention de la délivrance du brevet:
**03.11.2021 Bulletin 2021/44**

(51) Int Cl.:
**E03B 7/02** *(2006.01)*  **G06Q 10/06** *(2012.01)*
**G06Q 50/06** *(2012.01)*

(21) Numéro de dépôt: **18815681.4**

(22) Date de dépôt: **07.12.2018**

(86) Numéro de dépôt international:
**PCT/EP2018/083959**

(87) Numéro de publication internationale:
**WO 2019/110793 (13.06.2019 Gazette 2019/24)**

(54) **PROCÉDÉ D'ÉVALUATION DE L'ÉTAT D'UN SYSTÈME DE DISTRIBUTION D'EAU**

VERFAHREN ZUR BEURTEILUNG DES ZUSTANDS EINES WASSERVERTEILUNGSSYSTEMS

METHOD FOR ASSESSING THE STATE OF A WATER DISTRIBUTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2017 FR 1761795**

(43) Date de publication de la demande:
**14.10.2020 Bulletin 2020/42**

(73) Titulaire: **SUEZ Groupe**
**92040 Paris la Défense Cedex (FR)**

(72) Inventeurs:
• **ZRAICK, Flavia**
**75008 Paris (FR)**
• **RABAUD, Benjamin**
**78500 Sartrouville (FR)**
• **KINET, Noé**
**13100 Aix En Provence (FR)**
• **SIMON, Julien**
**95450 Guiry En Vexin (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2010/131001    WO-A1-2016/181593**
**US-A1- 2007 021 936    US-A1- 2014 152 465**
**US-B1- 6 245 224**

**Description**

DOMAINE TECHNIQUE DE L'INVENTION

L'invention se situe dans le domaine de la distribution d'eau.

L'invention concerne plus précisément un procédé de détermination de paramètres aptes à évaluer l'état d'un ou de systèmes (ou réseaux) de distribution d'eau.

ETAT DE LA TECHNIQUE

L'invention a pour objectif de permettre à un gestionnaire de réseaux de distribution d'eau de surveiller son réseau d'eau, de détecter, et surtout d'agir de manière préventive sur son réseau, voire de mettre en œuvre des moyens qui augmentent la durée de vie du réseau, et assurent sa conformité réglementaire.

En effet, dans une grande partie des zones urbaines, les conduites de distribution d'eau potable atteignent un âge critique et présentent un risque majeur de détérioration. Une connaissance de l'état du réseau, pour la plupart enterré, est essentielle pour maitriser les actions correctives (sondages, interventions, réparations, renouvellement, détartrage, nettoyage ...) mais aussi les actions préventives pour atténuer les effets de dégradation. Le problème principal est que les conduites sont pour la plupart enterrées et invisibles. Il est alors difficile de détecter et de mesurer les phénomènes de dégradation afin d'agir de manière préventive et précise, sans avoir à déterrer les circuits (et donc une bonne partie du réseau).

Il est connu des solutions pour la détection d'incidents passés ou en cours (fuite, dégradation de la qualité de l'eau). Il s'agit principalement de la détection et/ou localisation de conséquences d'un dysfonctionnement. Par exemple, on peut citer les demandes de brevet suivantes.

La demande de brevet WO2013121298 concerne une méthode informatisée pour la modélisation d'un réseau d'utilité (réseau de distribution). La méthode comprend la récupération de données d'un système d'information géographique (SIG), de données sur le patrimoine du réseau, et de données d'archivage de capteurs d'un ou de plusieurs éléments du réseau d'utilité. La méthode comprend la génération d'un ou de plusieurs éléments mathématiques (graphiques) à partir des données récupérées, afin de réaliser des analyses sur le système.

La valorisation des données avec des graphiques mathématiques potentiellement reliés entre eux (reporting) se base sur :

- l'identification de zones de surveillance et de maintenance du flux d'eau dans le réseau d'utilité ;
- l'identification des localisations optimales dans le réseau pour installer des capteurs et compteurs ;
- la modélisation du réseau basée sur les liens entre les emplacements de fuite connus dans le réseau d'utilité et des valeurs telles que des données historiques de fuites, des caractéristiques ou facteurs qui influencent les taux de fuite : âge du matériel ; complexité du réseau (quantité de tuyaux, raccords, vannes, autres connexions ...) ; propriétés géographiques contribuant à cacher des fuites, hautes pressions ou variabilités importantes de pression ; taux de fuites estimé à partir des fichiers de réparation historiques ; données historiques des débitmètres et des compteurs de pression ; fréquences de fuite, taux de perte d'eau, délai de détection d'une fuite, coûts de réparation ... ;
- la génération d'alertes et la proposition d'actions de maintenance.

La demande de brevet WO2013084068 concerne un système et une méthode pour identifier des événements liés entre eux dans un système de surveillance d'un réseau d'approvisionnement d'eau. La méthode comprend l'identification d'au moins deux événements de référence (dits évènements candidats) à partir des données d'événements provenant d'une pluralité de capteurs. L'anomalie est identifiée par la comparaison des données d'un évènement avec celles desdits évènements candidats.

La détermination selon laquelle les deux événements candidats, ou plus, ont un rapport avec un événement d'anomalie commun est rapportée à un utilisateur via une interface utilisateur.

La demande de brevet WO2012098467 concerne un procédé et un système pour déterminer statistiquement un ou plusieurs emplacements géographiques potentiels d'une anomalie que l'on soupçonne de s'être produite dans une région ou une zone d'un réseau de distribution d'eau.

Un réseau de distribution d'eau est constitué d'un réseau de canalisations pour acheminer l'eau jusqu'à des consommateurs et comporte des compteurs positionnés au sein du réseau de distribution d'eau. Les compteurs sont généralement disposés en des positions diverses, irrégulières dans le réseau et fournissent une série incomplète de données ayant trait à la circulation et à la qualité de l'eau sur le réseau dans son ensemble. Les compteurs mesurent des valeurs telles que le débit, la pression, les niveaux des réservoirs, l'acidité, la turbidité, la chloration, le bruit ... Les compteurs peuvent être placés sur l'intérieur ou l'extérieur des canalisations, à proximité des dispositifs de réseau, ou en d'autres emplacements arbitraires.

La demande de brevet WO2012098467 s'intéresse plus spécifiquement aux compteurs disposés dans les limites, à proximité, ou en des emplacements hydrauliquement liés à la région ou la zone d'une anomalie et fournissent des valeurs qui peuvent être liées à la l'anomalie.

La méthode peut comprendre la réception des données d'un événement anormal, les données d'événement anormal constituant une indication d'une anomalie se produisant ou s'étant produite, dans une région ou une zone du réseau de distribution d'eau. Des types d'anomalies comprennent les fuites, la chute de pression, l'augmentation inhabituelle de débit ou de consommation d'eau, la turbidité accrue, des modifications inhabituelles des taux de chlore, des modifications inhabituelles des pH...

La méthode peut comprendre une pluralité de tests réalisés sur les données d'événement anormal, chacun des tests étant conçu pour déterminer statistiquement un emplacement géographique potentiel de l'anomalie dans une région ou une zone. Certains des tests sont réalisés en utilisant des données d'événement anormal et les données de compteur associées. Certains tests, par exemple ceux liés aux fuites, sont effectués sur des données d'événement anormal de compteur représentant certaines des quantités suivantes : débit, pression, niveau des réservoirs, bruit, ou d'autres indicateurs d'activité hydraulique.

La demande de brevet WO2011107864 concerne un système et une méthode de surveillance de l'eau dans un réseau de distribution d'eau, qui se base sur la récupération de données de compteurs (au moins débit et pression), ainsi que des données secondaires issues d'autres sources (données de type télésurveillance et acquisition de données, par exemple données météorologiques, données calendaires ...) et sur l'application de modèles statistiques pour prédire d'autres valeurs.

Les données secondaires représentent une ou plusieurs conditions pouvant affecter le débit et/ou la consommation d'eau dans une région desservie par le réseau de distribution d'eau. Elles peuvent être : des données météorologiques ; des données calendaires représentant un ou plusieurs facteurs affectant la consommation d'eau à une date donnée ; des données de réparation représentant une ou plusieurs réparations exécutées sur le réseau de distribution d'eau ; de données structurelles représentant une structure du réseau de distribution d'eau.

La détection d'anomalies (fuites) se fait par la comparaison entre les valeurs mesurées et les valeurs prédites.

La demande de brevet WO2006073502 concerne un système de détection en temps réel de contaminants dans un réseau de distribution d'eau. Le système permet de surveiller la qualité de l'eau en des points éloignés d'un réseau de distribution d'eau, au moyen de capteurs d'eau installés dans des lieux d'utilisateurs finaux, afin de détecter des contaminants en aval du réseau de distribution, et d'envoyer un signal en cas d'anomalie.

La demande de brevet WO2010109117 concerne un dispositif et un procédé de contrôle de la qualité de l'eau dans un réseau d'eau potable. Le dispositif physique de contrôle de la qualité de l'eau est destiné à être monté sur une conduite dédiée à la distribution d'eau à un consommateur. Il comprend :

- une sonde pour mesurer au moins un paramètre du flux d'eau ;
- un dispositif de détection de contamination à partir de la mesure de la sonde ;
- un dispositif de détection de flux inverse dans la conduite d'eau ;
- un dispositif de désinfection (en fonction de la détection ou non de contamination) et/ou un dispositif obturant pour obturer la conduite (en fonction de la détection ou non d'un flux inverse) ;
- et un organe de commande.

L'ensemble des informations issues du dispositif peuvent être envoyées à un centre de contrôle apte à collecter les données du réseau et à actionner des vannes à distance.

La demande de brevet WO2008148952 concerne un procédé et une installation de contrôle en temps réel de la qualité de l'eau d'un réseau de distribution.

Le procédé de contrôle, en temps réel, de la qualité de l'eau d'un réseau de distribution d'eau potable comporte d'une part des compteurs de consommation équipés de dispositifs de télé relève, et d'autre part, des analyseurs en ligne répartis en des points de surveillance pour la mesure d'au moins un paramètre de qualité de l'eau. En outre :

- les données de consommation des compteurs équipés de dispositifs de télé relevé, ainsi que les mesures des analyseurs sont transmises à une unité de calcul comprenant un modèle hydraulique et un modèle cinétique de décroissance du paramètre de qualité considéré ;
- l'unité de calcul met à jour en permanence le modèle hydraulique selon les données de consommation reçues des compteurs ;
- l'unité de calcul établit des valeurs estimées du paramètre de qualité considéré aux différents points de surveillance du réseau ;
- et un système de pré-alerte effectue une comparaison entre les valeurs estimées du paramètre de qualité et les valeurs mesurées en différents points du réseau, une alerte étant déclenchée lorsque l'écart entre la valeur mesurée et la valeur estimée dépasse un seuil prédéterminé.

Le paramètre de qualité de l'eau constitue un traceur de la qualité de l'eau qui permet en temps réel de repérer si le réseau a été dégradé et/ou l'eau a été polluée. Les paramètres décrits sont la teneur en chlore et la turbidité, mais c'est essentiellement la teneur en chlore qui sert d'exemples.

Ainsi, on voit que la grande majorité des solutions de l'état de la technique se basent sur une des deux catégories de solutions.

La première catégorie de solutions se base sur la détermination par méthodes statistiques des conséquences de la dégradation (détection de fuites, fréquence historique de casses) ou des notions théoriques sur la dégradation (âge des conduites). Ces solutions essayent d'anticiper les occurrences futures sur la base des incidents passés. Ces solutions présentent des inconvénients majeurs :

- le passé n'est pas nécessairement représentatif du futur. La dégradation des matériaux (par exemple des conduites) n'évolue pas de manière linéaire. Les conséquences de la dégradation tendent à augmenter de façon exponentielle et la prévision des performances futures basée sur le passé peut sous-estimer considérablement l'état de dégradation des conduites et donc les besoins d'intervention ;
- il faut attendre que des occurrences et dysfonctionnements soient détectés en quantité suffisante pour permettre la modélisation du futur. Or, pour les incidents graves, et notamment ceux qui concernent des conduites stratégiques (par exemple de conduites de gros diamètre pour le transport d'eau) et doivent répondre à des contraintes réglementaires et contractuelles sur l'eau distribuée, il est préférable d'éviter ou de limiter les effets mesurables de la dégradation ;
- des parties du réseau ou l'environnement immédiat des matériaux peuvent avoir subi des changements, par exemple en cas de réparation, ou en cas d'anticipation visant à réduire les facteurs de dégradation. Il devient de ce fait encore plus compliqué d'anticiper le futur en se référant uniquement aux conditions et évènements passés ;
- l'anticipation des anomalies sur des zones critiques du réseau ne peut pas être suffisamment fine, puisque les solutions n'intègrent notamment pas des facteurs précurseurs majeurs liés aux phénomènes chimiques et physiques qui agissent sur les éléments (conduites, vannes, coudes ...) du réseau, autant les facteurs précurseurs provenant de l'intérieur que des facteurs provenant de l'extérieur de ces éléments.

La seconde catégorie de solutions se base sur des solutions de type analyse de données en continu pour détecter des dérives d'un paramètre par rapport à un paramètre normal et pour déclencher une alerte et/ou autre(s) action(s) en cas d'anomalie sur la qualité d'eau, et ce, localement et en temps réel. Ces solutions présentent des inconvénients majeurs :

- la détection est locale et ne s'étend pas au réseau ;
- la détection est en temps réel et ne permet pas d'anticiper les anomalies à venir ;
- en cas de détection d'anomalie, la partie du réseau dégradé doit être isolée, et comme ceci n'a pas pu être anticipé, cela peut générer des interruptions dans tout ou une partie du système de distribution.

En outre, pour l'ensemble des solutions présentées :

- aucune n'aborde la thématique du potentiel corrosif d'une eau distribuée ;
- aucune ne prévoit d'intégrer des données sur la qualité du sol ;
- aucune solution connue ne prévoit d'intégrer des informations sur l'état des conduites du réseau de distribution ;
- aucune ne vise à capitaliser sur des données historiques afin de faire des analyses sur la tendance d'évolution de paramètres et des phénomènes sur une longue durée ;
- aucune solution n'intègre un module de calcul scientifique, et/ou physique et/ou physico-chimique pour générer des données, les méthodes de calcul connues visant principalement à comparer des données et détecter des incidents ;
- aucune solution ne vise à localiser et à déterminer l'intensité des phénomènes de dégradation des matériaux et de la qualité de l'eau sur le réseau de distribution ;

Enfin, toutes les solutions sont conçues pour se décliner à un réseau ou un système donné. Aucune solution ne vise à avoir une méthode qui peut s'exploiter sur plusieurs réseaux, par exemple pour comparer des données caractérisant l'état de dégradation entre plusieurs réseaux, plusieurs localisations, et/ou typologies de réseaux différents.

Les paramètres qui caractérisent la chimie de l'eau, et son potentiel d'interaction avec les éléments du réseau pour déclencher les phénomènes de dégradation ne sont généralement pas exploitées, et parfois peu disponibles.

En effet, le contrôle de la qualité de l'eau distribuée se fait souvent à travers un nombre limité de paramètres qui sont faciles à mesurer, par exemple en utilisant des capteurs, des méthodes de terrain, voire nécessitent parfois des tests plus complexes et/ou longs, comme des tests de laboratoire. Pour qualifier le potentiel corrosif ou agressif de l'eau, il est cependant notamment nécessaire de disposer de données plus complètes quant à la composition chimique de l'eau.

La demande de brevet WO 2010/131001 A1 concerne un procédé pour déterminer la présence d'anomalies dans un système d'eau, le procédé consistant: (a) à détecter périodiquement au moins un paramètre de système d'eau à au moins un emplacement de détection; (b) à transmettre des données représentatives du paramètre détecté à une unité de traitement; (c) à effectuer une opération de vérification et de nettoyage sur les données reçues au niveau de l'unité de traitement; (d) à effectuer une opération d'élimination de bruit sur les données reçues au niveau de l'unité de traitement; (e) à prédire une valeur de données ultérieure pour le paramètre de système d'eau; (f) à déterminer un écart entre les données détectées et la valeur de données prédite à l'aide d'une commande de processus statistique; (g) à introduire l'écart traité dans un système d'inférence bayésienne pour déterminer une probabilité que l'écart de données représente une anomalie de système réelle; (h) à sonner l'alarme de détection si la probabilité dépasse un seuil prédéterminé.

L'invention vise à surmonter les inconvénients précités de l'art antérieur.

Plus particulièrement, l'objectif de l'invention est de disposer d'une méthode apte à évaluer de manière prédictive et précise l'état de dégradation d'éléments ou de zones d'un réseau de distribution d'eau, ou d'un réseau dans son ensemble, voire pour plusieurs réseaux de distribution d'eau.

Autrement dit, il est recherché une méthode d'évaluation qui ne soit pas uniquement locale, qui puisse prévoir de manière anticipée que des éléments du réseau ou des zones risquent de se dégrader, et qui puisse réaliser une évaluation précise, notamment plus précise que des méthodes seulement statistiques.

En outre, la méthode doit être simple d'utilisation, rapide, et ne doit pas nécessiter de mesures ou de tests longs et/ou complexes, par exemple des tests de type laboratoire.

En outre, l'invention vise à exploiter le plus de données mesurées et capitalisées sur le réseau et sur l'eau qui circule dans le réseau, de manière à augmenter la précision d'évaluation.

EXPOSE DE L'INVENTION

Un objet de l'invention permettant d'atteindre ce but est un procédé de détermination de paramètres aptes à renseigner sur l'état d'un système de distribution d'eau comprenant au moins une conduite apte à transporter de l'eau, le procédé comprenant les étapes suivantes :

- une étape d'importation apte à importer sur un calculateur des valeurs d'entrée d'au moins un paramètre de l'eau préalablement mesuré, relevées en au moins un point d'entrée du système de distribution d'eau et sur une période de relevé comprenant au moins une date de relevé ;
- une étape de sélection apte à sélectionner au moins un point courant ;
- une étape d'association apte à associer ledit point courant avec au moins un point d'entrée dans le système de distribution d'eau ;
- une étape de détermination apte à déterminer une valeur courante dudit au moins un paramètre de l'eau au point courant à partir de valeurs d'entrée audit au moins un point d'entrée associé audit point courant.

L'étape de détermination est de préférence réalisée à l'aide du calculateur.

Dans l'exemple de la présente description, par période de relevé, il faut comprendre un intervalle de temps compris entre deux dates données, ledit intervalle de temps comprenant au moins une date à laquelle un relevé a été réalisé au point d'entrée, ladite date étant appelée « date de relevé ».

Les valeurs d'entrée d'au moins un paramètre de l'eau relevées en au moins un point d'entrée du système de distribution d'eau sont en général réalisées par des mesures réalisées régulièrement par l'exploitant, selon une fréquence qui dépend du système de distribution, du nombre d'habitants ...

Dans l'exemple de la présente description, les termes amont et aval sont définis par rapport au sens principal de circulation de l'eau dans le système de distribution.

Dans l'exemple de la présente description, le (ou les) point(s) d'entrée sont dits associés à un point courant lorsqu'il(s) est (sont) situé(s) en amont dudit point courant, et que l'eau qui atteint ledit point courant provient du (ou des) point(s) d'entrée.

Selon un mode de réalisation, le procédé comprend en outre une étape de mesure d'au moins un paramètre courant mesuré en au moins un point courant au cours d'une période de mesure, l'étape de détermination étant réalisée à partir de valeurs d'entrée audit au moins un point d'entrée associé au point courant et dudit au moins un paramètre courant mesuré, la période de mesure comprenant au moins une date de mesure, postérieure ou égale à la période de relevé.

Dans l'exemple de la présente description, par période de mesure, il faut comprendre un intervalle de temps compris entre deux dates données, ledit intervalle de temps comprenant au moins une date à laquelle une mesure a été réalisé au point courant, ladite date étant appelée « date de mesure ».

Selon un mode de réalisation, le procédé comprend en outre une étape d'implémentation apte à implémenter dans le calculateur des données système pour le système de distribution d'eau, lesdites données système comprenant au moins des données sur la (les) conduite(s) et des données sur le sens d'écoulement de l'eau dans la (les) conduite(s).

L'étape d'implémentation de données système peut être préalable à l'étape de sélection.

Selon un mode de réalisation, le procédé comprend en outre une étape de modélisation ultérieure à l'étape d'implémentation de données système et apte à générer un modèle d'écoulement de l'eau dans le système de distribution d'eau, ledit modèle étant obtenu à partir des données système.

Le modèle d'écoulement de l'eau peut être généré à partir d'un logiciel tel que EPANET et des données systèmes.

Selon un mode de réalisation, l'étape d'importation est apte à importer des valeurs d'entrée d'au moins un paramètre de l'eau en plusieurs points d'entrée. Dans ce cas, l'étape d'association du procédé est apte à associer entre eux N point(s) courant et M points d'entrée, où $M > 1$ et $N \geq 1$. Les valeurs des nombres M et N et le rapport entre ces nombres dépendent du réseau, du nombre d'habitants.

Selon un mode de réalisation, l'étape d'association est réalisée en fonction du modèle d'écoulement de l'eau dans le système, préférentiellement obtenu lors de l'étape de modélisation.

Selon un mode de réalisation, le procédé comprend en outre une étape de zonage du système de distribution d'eau en plusieurs zones, apte à définir plusieurs zones, une zone comprenant au moins un point courant associé avec un ou plusieurs points d'entrée.

L'étape de zonage est réalisée préférentiellement à partir du modèle d'écoulement de l'eau dans le système, préférentiellement obtenu lors de l'étape de modélisation.

Selon un mode de réalisation, un paramètre de l'eau est la concentration dans l'eau d'au moins un composé chimique, par exemple du calcium (Ca) et/ou du magnésium (Mg) et/ou du sodium (Na) et/ou du potassium et/ou des sulfates et/ou des nitrates et/ou des silicates et/ou des chlorures du bicarbonate ($HCO_3$-).

Selon un mode de réalisation, un paramètre de l'eau est la composition chimique totale de l'eau.

Selon un mode de réalisation, un paramètre de l'eau est le pH et/ou la conductivité et/ou la température.

Selon un mode de réalisation, l'étape de détermination comprend les étapes suivantes :

- si le point courant est associé à un seul point d'entrée, alors on attribue à la valeur courante d'au moins un paramètre de l'eau la valeur moyenne temporelle des valeurs d'entrée dudit paramètre ;
- si le point courant est associé à au moins deux points d'entrée alors :

    o soit on calcule la moyenne temporelle des valeurs d'entrée d'au moins un paramètre de l'eau pour chaque point d'entrée associé audit point courant, on pondère chaque moyenne temporelle calculée par un premier coefficient de pondération, et on attribue à la valeur courante dudit paramètre une valeur égale à la somme de tous les points d'entrée des moyennes temporelles pondérées, la somme des premiers coefficients de pondération étant égale à 1 ;
    o soit on attribue à la valeur courante d'au moins un paramètre de l'eau la valeur moyenne temporelle des valeurs d'entrée dudit paramètre au point d'entrée hydrauliquement le plus proche du point courant ;

    la moyenne temporelle des valeurs d'entrée d'un paramètre de l'eau étant la moyenne desdites valeurs d'entrée sur une période de calcul comprenant au moins une date de relevé.

Dans l'exemple de la présente description, par période de calcul, il faut comprendre un intervalle de temps compris entre deux dates données, ledit intervalle de temps comprenant au moins une date de relevé.

La période de calcul peut être confondue avec la période de relevé. Elle peut être décalée par rapport à la période de relevé. Elle peut être incluse dans la période de relevé.

Si, dans la période de calcul choisie, il n'y a qu'une date de relevé, alors la moyenne temporelle des valeurs d'entrée d'un paramètre de l'eau en un point d'entrée est égale à la valeur d'entrée en ce point d'entrée à la date de relevé.

La pondération par un premier coefficient de pondération pourra se faire de façon arbitraire ou être calculée.

Selon un mode de réalisation, le premier coefficient de pondération d'un point d'entrée peut être égal à la moyenne temporelle des valeurs d'entrée pour un point d'entrée divisé par la somme des moyennes temporelles des valeurs d'entrée de tous les points d'entrée.

Par les termes « point d'entrée hydrauliquement le plus proche du point courant » on entend : le point d'entrée dont la distance par rapport au point courant, en suivant le réseau de distribution, est la plus courte.

Selon un mode de réalisation, un paramètre de l'eau est la valeur de la conductivité de l'eau.

Selon un mode de réalisation, la conductivité d'entrée de l'eau est mesurée en au moins un point d'entrée.

Selon un mode de réalisation, la conductivité d'entrée de l'eau est calculée en au moins un point d'entrée, à partir de valeurs d'entrée de paramètres de l'eau en ledit au moins un point d'entrée.

Selon un mode de réalisation, un paramètre courant mesuré est la conductivité courante de l'eau mesurée en un point courant à une date de mesure.

Selon un mode de réalisation, l'étape de détermination comprend les étapes suivantes :

- si le point courant est associé à un seul point d'entrée, et :

   ◦ si la valeur absolue de l'écart entre la conductivité courante et la conductivité d'entrée est inférieure ou égale à un pourcentage x de la conductivité courante, alors on attribue à la valeur courante d'au moins un paramètre de l'eau la ou les valeurs d'entrée dudit paramètre relevées à la date de relevé antérieure et temporellement le plus proche de la date de mesure, ou égale avec ladite date de mesure ;
   ◦ si la valeur absolue de l'écart entre la conductivité courante et la conductivité d'entrée est supérieure à un pourcentage x de la conductivité courante, alors on attribue à la valeur courante d'au moins un paramètre de l'eau la moyenne temporelle des valeurs d'entrée dudit paramètre ;

- si le point courant est associé à au moins deux points d'entrée et :

   ◦ si la valeur absolue de chaque écart entre la conductivité courante et la conductivité d'entrée en chaque point d'entrée associé audit point courant est inférieure ou égale à un pourcentage x de la conductivité courante, alors on attribue à la valeur courante d'au moins un paramètre de l'eau la moyenne temporelle des valeurs d'entrée dudit paramètre au point d'entrée en lequel la conductivité d'entrée de l'eau est la plus proche de la conductivité courante de l'eau ;
   ◦ si la valeur absolue d'au moins un écart entre la conductivité courante et la conductivité d'entrée en chaque point d'entrée associé audit point courant est supérieure à un pourcentage x de la conductivité courante, alors :

      ▪ soit on calcule la moyenne temporelle des valeurs d'entrée d'au moins un paramètre de l'eau pour chaque point d'entrée, on pondère la moyenne temporelle calculée pour chaque point d'entrée par un second coefficient de pondération fonction du rapport entre la conductivité d'entrée de l'eau en ledit point d'entrée et la conductivité courante, et on attribue à la valeur courante dudit paramètre une valeur égale à la somme des moyennes temporelles pondérées ; la somme desdits seconds coefficients de pondération étant égale à 1 ;
      ▪ soit on attribue à la valeur courante d'au moins un paramètre de l'eau la moyenne temporelle des valeurs d'entrée dudit paramètre au point d'entrée hydrauliquement le plus proche du point courant ;

   la valeur moyenne temporelle des valeurs d'entrée dudit paramètre étant la moyenne desdites valeurs d'entrée sur une période de calcul comprenant au moins une date de relevé et une date de mesure, la date de relevé étant antérieure ou égale à la date de mesure, et
   la valeur du pourcentage x étant définie en fonction de la précision souhaitée.

Dans ce cas, la période de calcul doit donc comprendre en outre au moins une date de mesure.

La valeur du pourcentage x peut être par exemple définie selon la variabilité de la qualité de l'eau et/ou la précision de la mesure.

Selon un mode de réalisation, si le point courant est associé à un seul point d'entrée, et si la valeur absolue de l'écart entre la conductivité courante et la conductivité d'entrée est supérieure à un pourcentage x de la conductivité courante, alors on attribue à la valeur courante d'au moins un paramètre de l'eau la moyenne temporelle des valeurs d'entrée dudit paramètre, pondérée par le rapport entre la conductivité d'entrée de l'eau et la conductivité courante de l'eau,
la valeur moyenne temporelle des valeurs d'entrée dudit paramètre étant la moyenne desdites valeurs d'entrée sur une période de calcul comprenant au moins une date de relevé et une date de mesure, la date de relevé étant antérieure ou confondue avec la date de mesure.

Selon un mode de réalisation, la période de calcul est obtenue en utilisant le modèle d'écoulement de l'eau, préférentiellement obtenue lors de l'étape de modélisation.

Selon un mode de réalisation préféré, la période de calcul est obtenue de manière empirique.

Si, on choisit une période de calcul dans laquelle il n'y a qu'une date de relevé, alors la moyenne temporelle des valeurs d'entrée d'un paramètre de l'eau pour un point d'entrée est égale à la valeur d'entrée à la date de relevé. Dans ce cas, il est préférable de choisir une période de calcul dont la date de relevé est proche de la date de mesure.

Selon un mode de réalisation, le procédé comprend en outre une étape de calcul d'au moins un indice de dégradation en au moins un point à partir d'au moins une valeur de paramètres de l'eau audit au moins un point.

Selon un mode de réalisation particulier, l'étape de calcul d'au moins un indice de dégradation est réalisée en au moins un point courant à partir d'au moins une valeur courante de paramètres de l'eau, déterminée lors de l'étape de détermination en le au moins un point courant.

Un indice de dégradation permet de déterminer le potentiel de dégradation de conduites du réseau (intérieur et extérieur des conduites), y compris les coudes, les vannes, les pompes, et plus généralement du réseau voire de la qualité de l'eau.

Selon un mode de réalisation, l'étape de calcul d'au moins un indice de dégradation en au moins un point courant est réalisée également à partir d'un paramètre courant mesuré audit point courant.

Selon un mode de réalisation, un paramètre courant mesuré en un point courant est le pH de l'eau, l'étape de calcul d'au moins un indice de dégradation comprenant les étapes suivantes :

- une étape de calcul d'un pH d'équilibre (pHs) de l'eau à partir de valeurs courantes de concentration de composés chimiques dans l'eau déterminées en ledit point courant puis ;
- une étape de comparaison du pH et du pH d'équilibre (pHs) en ledit point courant puis ;
- une étape de déduction d'un indice de dégradation du système de distribution d'eau en ledit point courant.

Dans ce cas, cela permet en particulier d'évaluer le risque de dégradation d'une conduite en ciment en ledit point courant.

Selon un mode de réalisation, le au moins un paramètre de l'eau comprend au moins la concentration de l'eau en chlorures et/ou en sulfates, et l'étape de calcul d'au moins un indice de dégradation comprend une étape de déduction d'un indice de dégradation du système de distribution d'eau en au moins un point courant en fonction de valeurs courantes déterminées en ledit point courant d'au moins une concentration de l'eau en chlorures et/ou en sulfates.

Dans ce cas, cela permet en particulier d'évaluer le risque de dégradation d'une conduite en matériau ferreux en ledit point courant.

Selon un mode de réalisation, l'étape de calcul d'au moins un indice de dégradation comprend l'utilisation d'un indice de corrosion apte à calculer une vitesse de corrosion.

Selon un mode de réalisation, l'étape de calcul d'au moins un indice de dégradation comprend l'utilisation d'un indice d'émission de particules apte à renseigner sur la qualité de l'eau en en au moins un point courant.

Lesdits indices permettent notamment de déterminer le relâchement de particules dues à la corrosion dans l'eau.

Selon un mode de réalisation, le procédé comprend en outre une étape d'estimation de la durée de vie d'une (ou plusieurs) conduite(s) du système de distribution en combinant un ou des indice(s) de dégradation avec des données d'entrée système.

Selon un mode de réalisation, le procédé comprend en outre une étape de définition de zones critiques parmi les zones définies lors de l'étape de zonage du système.

Selon un mode de réalisation, le procédé comprend en outre une étape de vérification d'au moins un indice de dégradation du système de distribution d'eau comprenant :

- une étape de mesure de grandeurs de dégradation dudit système en au moins un point du système de distribution ;
- une étape de comparaison des grandeurs de dégradation mesurées avec les indices de dégradation calculés en ledit au moins un point lors de l'étape de calcul d'indices de dégradation.

Le point peut être un point d'entrée ou un point courant.

Selon un mode de réalisation, le procédé comprend en outre une étape de recalage du au moins un indice de dégradation du système de distribution d'eau, en utilisant les grandeurs de dégradation mesurées dudit système en des points courants ou en des points d'entrée lors de l'étape de vérification.

Selon un mode de réalisation, l'étape de calcul d'au moins un indice de dégradation et/ou l'étape de vérification, et/ou l'étape de recalage comprend une étape d'analyse de l'environnement et/ou du système de distribution d'eau.

En particulier, cela peut comprendre une étape de mesure d'échantillon du sol autour dudit système, et/ou de mesure directement au niveau des conduites afin de vérifier l'état réel de dégradation du système.

Ainsi, l'invention est relative à un procédé qui permet de générer des informations sur l'état de dégradation d'un réseau de distribution, et en particulier des conduites de distribution d'eau potable afin d'identifier des points et/ou des zones de risque de casse et de détérioration importante de la qualité de l'eau transportée.

Les résultats peuvent être géolocalisés à l'aide d'une interface intuitive qui affiche les zones critiques (autrement dit à risque de dégradation) afin de permettre aux gestionnaires du réseau de lancer des actions préventives d'incidents graves comme les casses majeurs et les non-conformités.

Ces actions préventives peuvent inclure la mise en place de traitements de conditionnement des eaux transportées, le renouvellement stratégique des conduites à plus grand risque de casse, la mise en œuvre d'interventions de nettoyage du réseau.

Selon un mode de réalisation, le procédé comprend en outre une étape de correction comprenant une étape d'envoi à un système de pilotage d'au moins un indice de dégradation calculé et/ou recalé, le système de pilotage étant apte agir sur le système de distribution d'eau et/ou sur l'eau de manière à corriger l'état dudit système de distribution d'eau.

Selon un mode de réalisation particulier, l'étape de correction consiste en l'ajout d'un ou de plusieurs réactifs dans l'eau, la quantité d'un réactif étant calculée par le système de pilotage en fonction d'au moins un indice de dégradation calculé et/ou recalé.

Contrairement aux méthodes qui utilisent un historique d'occurrences passées pour anticiper des incidents futurs, ce qui s'avère parfois trop tardif pour agir de manière préventive, la méthode selon l'invention exploite un maximum de données mesurées et/ou capitalisées, aborde les phénomènes d'interactions entre l'eau dont la qualité et les paramètres (vitesses, pression ...) varient en tout point du réseau et le système de distribution lui-même (conduites, vannes, pompes ...), voire entre le système de distribution et son environnement extérieur.

Ainsi, l'invention présentée combine des informations sur l'état réel, mesuré ou calculé de l'eau et du réseau avec des informations sur les phénomènes physiques et chimiques de dégradation qui agissent à l'interface entre l'eau et le réseau, en particulier entre l'eau et les conduites du réseau.

## DESCRIPTION DES FIGURES

D'autres caractéristiques et avantages de l'invention apparaîtront à l'aide de la description qui suit donnée à titre illustratif et non limitatif, faite en regard des figures annexées parmi lesquelles :

- la figure 1 illustre un premier exemple d'une partie d'un réseau de distribution d'eau ;
- la figure 2 illustre un second exemple d'une partie d'un réseau de distribution d'eau ;
- la figure 3 illustre un troisième exemple d'une partie d'un réseau de distribution d'eau ;
- la figure 4 illustre un quatrième exemple d'une partie d'un réseau de distribution d'eau ;
- la figure 5 illustre un premier mode de réalisation du procédé selon l'invention ;
- la figure 6 illustre un second mode de réalisation du procédé selon l'invention ;
- la figure 7 illustre un troisième mode de réalisation du procédé selon l'invention ;
- la figure 8 illustre un quatrième mode de réalisation du procédé selon l'invention ;
- la figure 9 illustre un cinquième mode de réalisation du procédé selon l'invention ;
- la figure 10 illustre un premier mode de réalisation de l'étape de détermination ;
- la figure 11 illustre un second mode de réalisation de l'étape de détermination ;
- la figure 12 illustre un troisième mode de réalisation de l'étape de détermination.

## EXPOSÉ DÉTAILLÉ DE MODES DE RÉALISATION PARTICULIERS

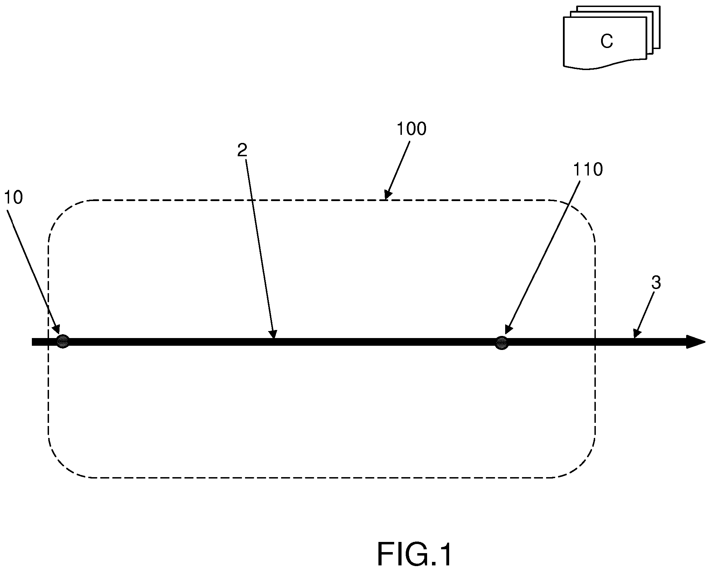

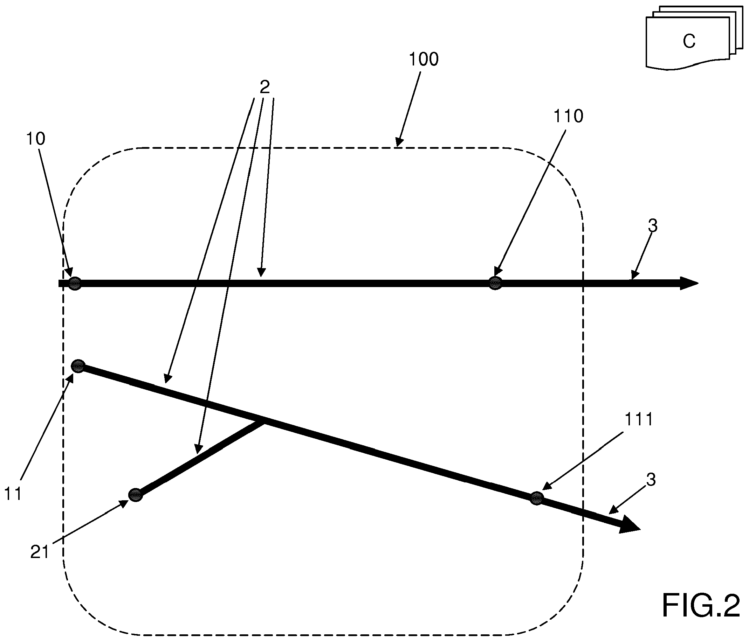

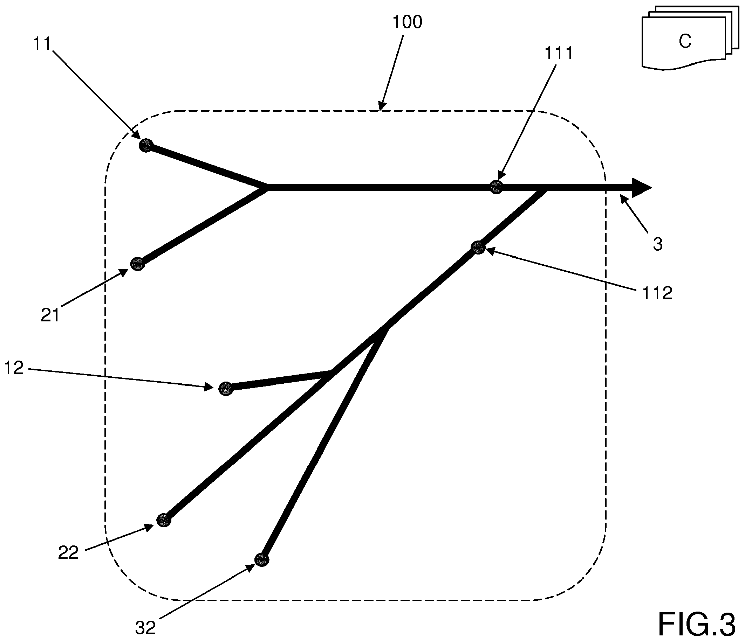

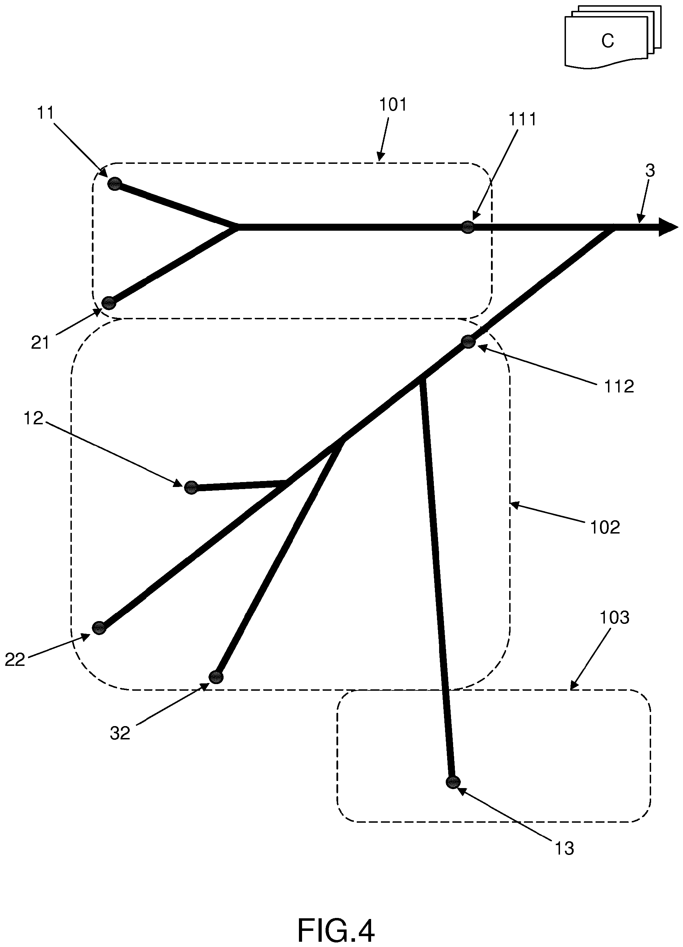

Les figures 1 à 4 illustrent plusieurs schémas qui correspondent à plusieurs exemples de parties d'un système 100 de distribution d'eau.

Un système de distribution d'eau peut également être nommé réseau de distribution dans la présente description.

Un système 100 de distribution d'eau est apte à transporter de l'eau depuis un site de production jusqu'à des sites de consommation.

Un calculateur C permet de réaliser les différentes étapes du procédé selon l'invention. Il n'est généralement pas relié physiquement au système de distribution.

Le système 100 comprend une ou plusieurs conduites 2 aptes à transporter de l'eau 3, notamment entre un point d'entrée 10 et un point courant 110.

Un point d'entrée peut être situé dans une usine de traitement d'eau. Il peut être aussi nommé « point de distribution d'eau ».

Un point courant correspond en général à un point du réseau de distribution dans lequel on mesure tout ou partie des paramètres suivants : pH, conductivité, température. Ce sont des points disposés de manière astucieuse et/ou réglementaire par le gestionnaire ou le concepteur du réseau de distribution à des endroits du système de distribution d'eau, et équipés pour réaliser de telles mesures. Le nombre de ces points varie en fonction de la longueur de réseau, de la population. Ceci est réglementé par exemple en France.

Les différents paramètres intéressants pour un système de distribution d'eau sont les suivantes :

| Paramètres | Valeur obtenue | Moyen d'obtention |
|---|---|---|
| Calcium | Concentration | Mesuré ou corrélé |

(suite)

| Paramètres | Valeur obtenue | Moyen d'obtention |
|---|---|---|
| Magnésium | Concentration | Mesuré ou corrélé |
| Sodium | Concentration | Mesuré ou corrélé |
| Potassium | Concentration | Mesuré ou corrélé |
| Alcalinité ($HCO_3^-$) | Concentration | Mesuré ou corrélé |
| Chlorure | Concentration | Mesuré ou corrélé |
| Sulfates | Concentration | Mesuré ou corrélé |
| Nitrates | Concentration | Mesuré ou corrélé |
| Silicates | Concentration | Mesuré ou corrélé |
| pH | Valeur de pH | Mesuré |
| Conductivité | Valeur de conductivité | Mesuré ou calculé |
| Température | Valeur de température | Mesuré |
| pHs | Valeur de pH équilibre | Calculé |

Si, en général, on a accès aux paramètres de concentration de l'eau au niveau des points d'entrée, ce qui permet notamment d'en déduire une valeur de conductivité (qui peut également être mesurée au point d'entrée), on n'a généralement pas accès à tous les paramètres de concentration aux points courants, et encore moins sur toute la longueur de la canalisation.

En outre, si l'eau en un point courant provient de différentes usines, il y a un mélange d'eau, et par conséquent un mélange de différentes qualités d'eau.

Un point courant 110 peut être associé à un seul point d'entrée 10, autrement dit l'eau passant par ledit point courant 110 peut être alimenté par un seul point d'entrée 10.

Un point courant 111, resp 112 peut être associé à plusieurs points d'entrée 11, 21, resp 12, 22, 32, autrement dit l'eau passant par ledit point courant 111, resp 112 peut être alimenté par plusieurs points d'entrée 11, 21, resp 12, 22, 32.

Le système 100 peut être organisé en plusieurs zones 101, 102, 103, chaque zone peut par exemple regrouper des points d'entrée et des points courants associés entre eux.

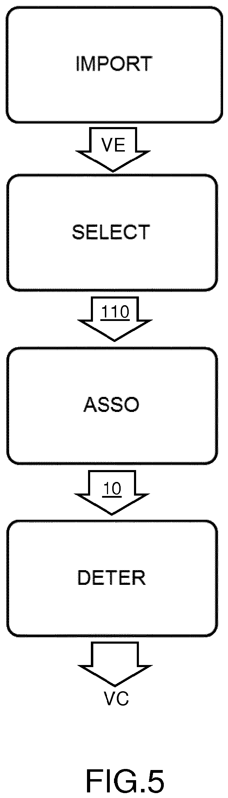

La figure 5 illustre un premier mode de réalisation du procédé de surveillance d'un système 100 de distribution d'eau comprenant les étapes suivantes :

- une étape d'importation IMPORT de valeurs d'entrée VE d'au moins un paramètre de l'eau relevées en au moins un point d'entrée 10 du système 100 de distribution d'eau et sur une période de relevé $\Delta t_{relevé}$ comprenant au moins une date de relevé $t_{relevé}$ puis,
- une étape de sélection SELECT apte à sélectionner au moins un point courant 110 puis,
- une étape d'association ASSO apte à associer ledit point courant avec au moins un point d'entrée 10 dans le système 100 de distribution d'eau puis,
- une étape de détermination DETER apte à déterminer une valeur courante VC dudit au moins un paramètre de l'eau au point courant 110 à partir de valeurs d'entrée VE audit au moins un point d'entrée 10 associé audit point courant.

Le point courant 110, ainsi que le ou les points d'entrée 10 sont enregistrés dans le calculateur C.

L'étape de détermination DETER est réalisée à l'aide du calculateur C.

Il peut y avoir des périodes de relevés $\Delta t_{relevé}$, et des dates de relevés $t_{relevé}$ différents selon les points d'entrée.

Ainsi, le procédé selon l'invention doit commencer par utiliser des données provenant d'un ou de différents points de production d'eau (points d'entrée). Les données sont les valeurs en entrée VE de paramètres de l'eau.

Ensuite, il est essentiel de sélectionner au moins un point courant, situé en aval du ou des points d'entrée. L'association du point courant sélectionné avec un ou plusieurs points d'entrée est réalisée par la connaissance de la configuration de l'écoulement de l'eau dans le réseau. Et elle est essentielle pour connaître les qualités des eaux qui proviennent des points d'entrée et qui atteignent le point courant, et notamment pour connaître les différents eaux qui se mélangent avant d'atteindre le point courant sélectionné.

La figure 5 illustre les 4 étapes réalisées les unes après les autres. Alternativement, seule l'étape DETER peut être réalisée après les autres étapes, tout ou partie des étapes IMPORT, SELECT et ASSO pouvant être réalisées dans un ordre indifférent, ou en parallèle, avant l'étape DETER.

D'une manière générale, pour tous les modes de réalisation du procédé illustrés dans les figures 5 à 9, les différentes étapes peuvent ne pas être réalisées dans l'ordre illustré.

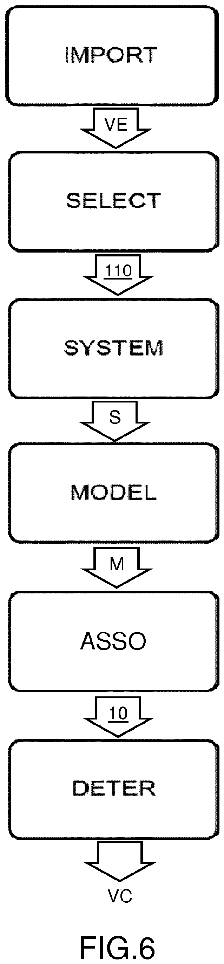

La figure 6 illustre un second mode de réalisation du procédé, dans lequel les étapes SYSTEM, MODEL sont ajoutées.

L'étape SYSTEM est une étape d'implémentation dans le calculateur de données système S, pour le système 100 de distribution d'eau. Les données système comprennent au moins des données sur la (les) conduite(s) et des données sur le sens d'écoulement de l'eau dans la (les) conduite(s).

Ce sont en général des données géo-localisées sur l'ensemble du réseau de distribution étudié, qui peuvent comprendre notamment et non exclusivement :

- le matériau des conduites, les diamètres, les longueurs, les dates de pose, les profondeurs de pose ;
- l'hydraulique du réseau avec notamment les débits, les sens et les vitesses d'écoulement ;
- les pressions internes de service (min, max, moy) ;
- l'historique des analyses de qualité d'eau réalisées en différents points du réseau d'eau potable ;
- la typologie des sols ;
- l'historique des casses sur conduite enregistrées sur le réseau ;
- le résultat des diagnostics de conduites ;
- l'historique des plaintes clients de détérioration de la qualité.

L'étape SYSTEM d'implémentation de données système peut être préalable à l'étape de sélection SELECT.

L'étape MODEL est une étape de modélisation apte à générer un modèle M d'écoulement de l'eau dans le système 100 de distribution d'eau, ledit modèle étant obtenu à partir des données système. L'étape MODEL est ultérieure à l'étape SYSTEM.

Le modèle d'écoulement de l'eau peut être généré à partir d'un logiciel tel que EPANET et des données systèmes.

L'étape d'association ASSO peut ainsi être réalisée en utilisant le modèle généré lors de l'étape MODEL de modélisation.

Cela est très avantageux lorsqu'il y a un réseau complexe, avec plusieurs points d'entrée associés avec plusieurs points courants.

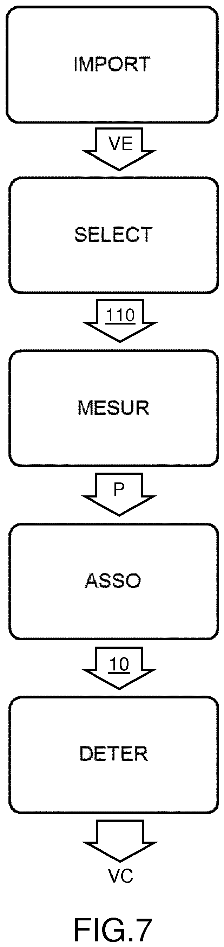

La figure 7 illustre un troisième mode de réalisation du procédé, dans lequel une étape MESUR est ajoutée, par rapport au premier mode. Cette étape prévoit la mesure en au moins un point courant 110 d'au moins un paramètre courant P. Cette mesure est réalisée au cours d'une période de mesure $\Delta t_{mesur}$. L'étape de détermination DETER est alors réalisée à partir de valeurs d'entrée VE et dudit au moins un paramètre courant mesuré, la période de mesure $\Delta t_{mesur}$ comprenant au moins une date de mesure $t_{mesur}$, postérieure ou confondue avec une date de relevé $t_{relevé}$.

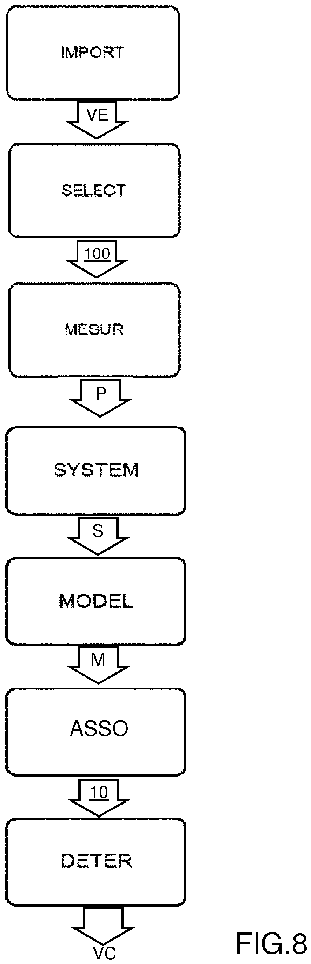

La figure 8 illustre un quatrième mode de réalisation du procédé, qui est une combinaison des second et troisième modes de réalisation.

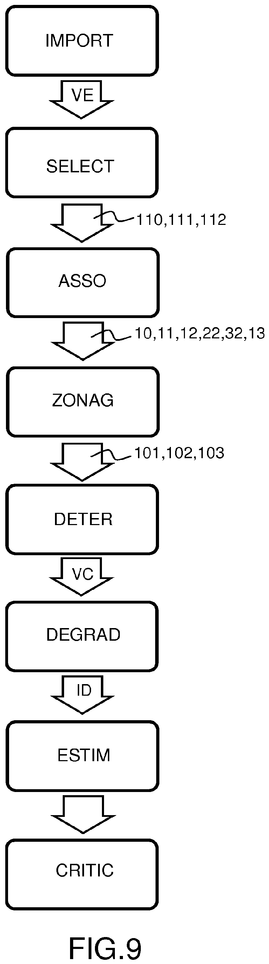

La figure 9 illustre un cinquième mode de réalisation du procédé selon l'invention dans lequel les étapes ZONAG, DEGRAD, ESTIM, CRITIC sont ajoutées.

L'étape de zonage ZONAG du système 100 de distribution d'eau permet de définir plusieurs zones 101, 102, 103 pour ledit système, une zone comprenant au moins un point courant 110, 111, 112 associé au moins un point d'entrée 10, 11, 21, 12, 22, 32, 13.

L'étape de zonage consiste en la répartition du système de distribution 100 en différentes zones géographiques 101, 102, 103, qui sont autant de zones dans lesquelles l'écoulement de l'eau et la qualité de l'eau peuvent être plus précisément modélisés. Ainsi, on peut associer à chaque zone ces données d'écoulement de l'eau et de qualité de l'eau, par exemple pour une période de temps donnée.

L'étape de modélisation MODEL peut contribuer à ou permettre la répartition du système 100 de distribution d'eau en zones, lors de l'étape de zonage ZONAG.

En effet, il est important pour réaliser l'étape de zonage, de comprendre la configuration de l'écoulement de l'eau dans le réseau, de savoir où les qualités de l'eau sont similaires, comment les différentes sources d'eau se mélangent.

L'ensemble des zones représentent l'organisation générale du système 100 de distribution d'eau. Ainsi, une fois les calculs réalisés pour chaque zone, le regroupement des différentes zones permet de retrouver le système 100 de distribution d'eau dans son ensemble, enrichi des données et des informations déterminées lors des étapes DETER réalisées dans chaque zone.

Les étapes d'importation IMPORT, de sélection SELECT, d'association ASSO et de détermination DETER peuvent être réalisées pour chacune des zones, afin de déterminer une valeur courante VC de paramètre(s) de l'eau au point courant contenu dans une zone 101 à partir de valeurs d'entrée VE d'au moins un point d'entrée 10 associé audit point courant 110 et contenu dans la zone 101. Ceci a pour avantage de réaliser des calculs d'extrapolation de manière moins complexes, par zone, surtout pour un système de distribution d'eau complexe. Dans chaque zone, la configuration d'écoulement est simplifiée.

Chaque configuration par zone est associée à une ou des périodes de temps, qui correspondent souvent à des saisons de l'année. Cela signifie que les points d'entrée, avec leur ensemble de données relevées à différentes dates, peuvent être affectés à différentes configurations d'écoulement et différentes zones selon la saison.

L'étape de calcul DEGRAD consiste à déterminer au moins un indice de dégradation ID en au moins un point courant 110, 111, 112 à partir d'au moins une valeur courante VC de paramètres de l'eau audit au moins un point courant déterminée lors de l'étape de détermination DETER.

L'étape DEGRAD peut consister à déterminer des valeurs de cinétiques de dégradation interne et/ou externe du réseau de distribution, en particulier des conduites, pour des points courants spécifiques et/ou pour des zones définies dans l'étape ZONAG, voire en des points d'entrée.

L'étape de calcul DEGRAD en des points courants met en œuvre le calcul de valeurs de différents indices relatifs au potentiel de dégradation, sur la base des données extrapolées dans l'étape DETER, notamment en combinaison avec des données mesurées lors de l'étape MESUR.

Plusieurs indices de caractérisation de la dégradation sont considérés comme par exemple l'indice de Langelier, l'indice de Larson, l'indice SUEZ de corrosion et l'indice SUEZ de relargage de particules.

Les valeurs des indices sont ensuite converties en notions de cinétique de dégradation interne et externe du réseau de distribution pour des points spécifiques et/ou des zones définies dans l'étape ZONAG. Cette conversion peut être réalisée avec des modèles de dégradation développés spécifiquement par SUEZ ou avec des modèles de dégradation de la littérature.

Un indice de dégradation considéré peut être l'indice de Langelier (LSI). Dans ce cas, un paramètre courant mesuré au point courant est le pH de l'eau, l'étape de calcul de l'indice de dégradation en ce point courant comprenant les étapes suivantes :

- une étape de calcul d'un pHs (pH d'équilibre) de l'eau à partir de valeurs courantes de concentration de composés chimiques dans l'eau déterminées en ledit point courant puis ;
- une étape de comparaison du pH et du pHs en ledit point courant puis ;
- une étape de déduction d'un indice de dégradation d'une conduite en ledit point courant.

L'indice de Langelier est donc un indice qui répond à la formule LSI = pH-pHs, avec les résultats suivants :

- Si LSI > 0 : c'est une eau incrustante ou entartrante
- Si LSI < 0 : c'est une eau agressive pour le $CaCO_3$
- Si LSI = 0 : l'eau est à l'équilibre, saturée en $CaCO_3$, ce qui implique que des dépôts de $CaCO_3$ ne sont ni déposés ni dissous.

L'indice de Langelier est avantageux pour caractériser la dégradation de conduites en ciment.

Un autre indice de dégradation considéré peut être l'indice de Larson. Dans ce cas, au moins un paramètre de l'eau en un point courant comprend au moins la concentration de l'eau en chlorures et/ou en sulfates, l'étape de calcul de l'indice de dégradation comprenant une étape de déduction de l'indice de Larson en ce point en fonction de valeurs courantes d'au moins une concentration de l'eau en chlorures et/ou en sulfates déterminées en au moins un point courant.

L'indice de Larson (indice de corrosion des métaux ou La) correspond à la formule :

$La=([Cl\text{-}]+2*[SO_4{}^{2-}])/[HCO_3\text{-}]$ Concentration exprimées en mol/l.
Ou encore La = [ (sulfates × 2] + chlorures ] / alcalinité.

Ainsi, des tables donnent des tendances à la corrosion en fonction de l'indice de Larson La calculé :

- Si La < 0.2 : pas de tendance à la corrosion
- Si 0.4 < La ≥ 0.2 : faible tendance
- Si 0.5 < La ≥ 0.4 : légère tendance
- Si 1.0<La ≥ 0.5 : tendance moyenne
- Si La ≥ 1.0 : nette tendance à la corrosion

On considère donc que le risque commence dès que La ≥ 0.5. Cependant, selon les pays, les recommandations peuvent être différentes.

L'indice de Larson est avantageux pour caractériser la dégradation de conduites en matériau ferreux.

D'autres indices peuvent être utilisés, comme par exemple l'indice Buffer ($\beta$) :

$$\beta = 2.3 \left( \frac{[H_2CO_3][HCO_3^-]}{C_T, CO_3} + \frac{[HCO_3^-][OH^-]}{C_T, CO_3} \right)$$

Où $C_T, CO_3$ sont les concentrations totales en espèces carbonées, exprimées en moles/L.

Deux autres indices considérés peuvent être l'indice SUEZ de corrosion $IC_{SUEZ}$ et l'indice SUEZ de relargage de particules $PRI_{SUEZ}$. Ces indices sont explicités dans la publication "Predicting the effect of water quality on water distribution cast iron and steel pipes using two novel indices". M. Philibert et al. / Novel corrosion indices for iron and steel pipes Water Science & Technology: Water Supply / in press / 2017.

L'indice de corrosion $IC_{SUEZ}$ permet de calculer une vitesse de corrosion : il se calcule à partir de l'indice de Buffer ($\beta$), de l'indice de Langelier (LSI) et de l'indice de Larson (La).

$$IC_{SUEZ} = \frac{K \times \left(1 + \sqrt{La}\right) \times (1 + \beta)^p}{\beta}$$

où l'indice $\beta$ (en mmol/L) est déterminé par simulation chimique d'injection de HCl, et où :

p = 1 si LSI < 0 ou p = -1 si LSI ≥ 0

$$K = \frac{La}{(1 + La)}$$

K = 1 si pH > 7 ou $\quad$ si pH ≤ 7

- Si $IC_{SUEZ}$ ≤ 2 : risque de corrosion faible
- Si 2 < $IC_{SUEZ}$ ≤ 9 : risque de corrosion modéré
- Si 9 < $IC_{SUEZ}$ ≤ 16 : risque de corrosion élevé
- Si $IC_{SUEZ}$ > 16 : risque de corrosion très élevé

L'indice de relâchement de particules PRI permet de renseigner sur la qualité de l'eau en au moins un point courant. : il se calcule également à partir de l'indice de Buffer ($\beta$), de l'indice de Langelier (LSI) et de l'indice de Larson (La).

$$PRI_{SUEZ} = (1 + La) \times (1 + \beta)^p$$

où l'indice $\beta$ (en mmol/L) est déterminé par simulation chimique d'injection de HCl, et où
p = 1 si LSI < 0 ou p = -1 si LSI ≥ 0

- Si $PRI_{SUEZ}$ ≤ 1 : risque très faible de relâchement de particules
- Si 1 < $PRI_{SUEZ}$ ≤ 4 : risque faible de relâchement de particules
- Si 4 < $PRI_{SUEZ}$ ≤ 10 : risque élevé de relâchement de particules
- Si $PRI_{SUEZ}$ >10 : risque très élevé de relâchement de particules

L'étape d'estimation ESTIM permet d'estimer la durée de vie d'au moins une conduite 2 du système de distribution 100 en combinant au moins un indice de dégradation ID avec des données d'entrée système S.

Elle consiste à réaliser des calculs qui combinent les résultats de l'étape DEGRAD (indices de dégradation) avec des données qui caractérisent le système de distribution, et notamment les conduites du réseau (âge, dimension, type matériaux, pression de distribution, profondeur de pose...) consolidées dans l'étape SYSTEM, ceci pour estimer une durée de vie résiduelle pour des points courants spécifiques et/ou des zones définies dans l'étape ZONAG.

L'étape de définition CRITIC permet de déterminer les zones critiques parmi les zones définies lors de l'étape de zonage ZONAG du système 100, et de les distinguer géographiquement.

La criticité d'une zone est déterminée par un ou plusieurs des facteurs suivants :

- très fort potentiel théorique de dégradation des conduites ;

- très fort potentiel théorique de dégradation de la qualité de l'eau ;
- très fort niveau mesuré de dégradation des conduites ;
- très fort niveau mesuré de dégradation de la qualité de l'eau ;
- combinaison de fort potentiel théorique de dégradation des conduites et fort niveau mesuré de dégradation de conduites ;
- combinaison de fort potentiel théorique de dégradation de la qualité de l'eau et fort niveau mesuré de dégradation de la qualité de l'eau.

L'étape de détermination DETER a pour objectif d'extrapoler les valeurs de paramètres, et en particulier de composition chimique de l'eau, connues et relevées aux points d'entrée du réseau afin de réaliser les calculs qui caractérisent les phénomènes de dégradation dans l'ensemble dudit réseau de distribution.

L'objectif est d'exploiter au maximum ces valeurs, qu'on nomme aussi données, et d'en déterminer des valeurs corrélées en d'autres points du réseau.

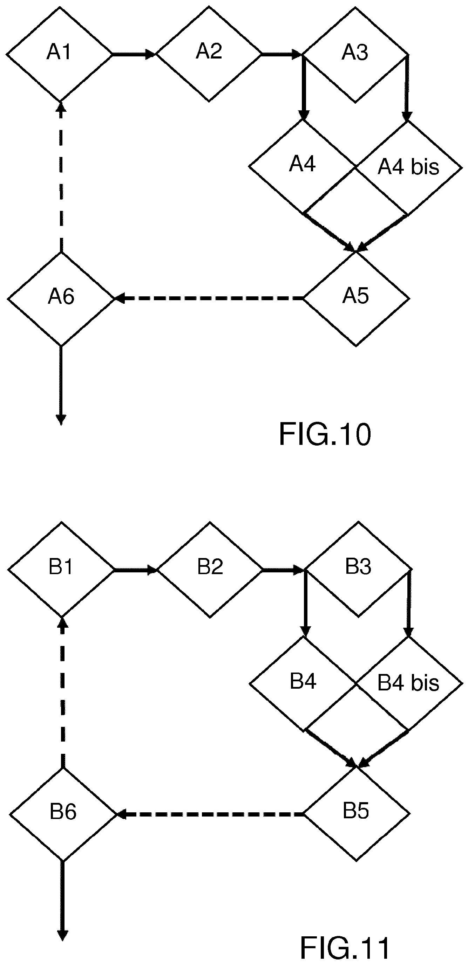

L'étape de détermination de ces valeurs corrélées aux points courant peut être réalisée selon différents modes, en fonction de la configuration du réseau de distribution et/ou du zonage de ce réseau. Ces différents modes sont illustrés dans les figures 10 à 12.

Pour l'ensemble des figures 10 à 12 :

- les « données d'entrée complètes » à une date de relevé $t_{relevé}$ en un point d'entrée concernent les valeurs en entrée de paramètres de l'eau suivants : la conductivité $\sigma$ (mesurée ou calculée), des concentrations en composés chimiques dans l'eau, et éventuellement, le pH et la température ;
- les « données courantes complètes » à une date de calcul $t_{calc}$ au point courant concernent au moins les valeurs courantes mesurées de paramètres de l'eau suivants : la conductivité $\sigma$, et éventuellement, le pH et température.

La figure 10 illustre le cas où le point courant 110 est associé à un seul point d'entrée 10. Les étapes suivantes sont illustrées :

- Etape A1 : pour une période de calcul sélectionnée $\Delta t_{calc}$, sélection d'une première date de calcul $t_{calc}$ comprise dans la période $\Delta t_{calc}$ et à laquelle les données courantes sont complètes au point 110 ;
- Etape A2 : sélection d'au moins une date de relevé $t_{relevé}$ antérieure à la première date de calcul $t_{calc}$ sélectionnée à l'étape A1 pour laquelle les données d'entrée sont complètes au point 10 (de préférence la date de relevé $t_{relevé}$ du point d'entrée 10 est choisie pour être la plus proche possible de la date de calcul $t_{calc}$) ;
- Etape A3 : calcul de la valeur absolue $|\Delta\sigma|$ de la différence entre la conductivité $\sigma_{10}$ du point 10 à la date $t_{relevé}$ et la conductivité $\sigma_{110}$ du point 110 à la date $t_{calc}$ ;
- Etape A4 : si $|\Delta\sigma|$ est inférieure ou égale à x % de la conductivité $\sigma_{110}$, alors on reporte au point 110 pour la date $t_{calc}$ les valeurs des concentrations en composés chimiques relevées au point 10 à la date $t_{relevé}$ la plus proche de la date $t_{calc}$ ;
- Etape A4$_{bis}$ : si $|\Delta\sigma|$ est supérieure à x % de la conductivité $\sigma_{110}$, alors on reporte au point 110 pour la date $t_{calc}$ les valeurs moyennes sur la période de temps $\Delta t_{calc}$ des concentrations pour chaque composé chimique relevées au point 10 aux dates $t_{relevé}$ ;
- Etape A5 (étape DEGRAD) : calcul des indices de dégradation ID permettant de qualifier les interactions entre l'eau et les matériaux aux points 10 et 110 :
- Etape A6 (option) : application des étapes A1 à A5 précédentes pour une seconde date de calcul $t_{calc}$ à laquelle les données sont complètes au point 110.

La figure 11 illustre le cas où le point courant 111 est associé à deux points d'entrée 11, 21.

- Etape B1 : pour une période de calcul sélectionnée $\Delta t_{calc}$, sélection d'une première date de calcul $t_{calc}$ comprise dans la période $\Delta t_{calc}$ et à laquelle les données courantes sont complètes au point 111 ;
- Etape B2 : sélection, pour chaque point d'entrée 11, 21, d'au moins une date de relevé $t_{relevé}$ antérieure à la première date de calcul $t_{calc}$ sélectionnée à l'étape B1 pour laquelle les données d'entrée sont complètes (de préférence la date de relevé $t_{relevé}$ de chaque point d'entrée est choisie pour être la plus proche possible de la date de calcul $t_{calc}$) ;
- Etape B3 : calcul, pour chaque point d'entrée, de la valeur absolue $|\Delta\sigma|_1$(resp $|\Delta\sigma|_2$) de la différence entre la conductivité $\sigma_{11}$ (resp $\sigma_{12}$) du point d'entrée 11 (resp 21) à la date $t_{relevé}$ et la conductivité $\sigma_{111}$ du point courant 111 à la date $t_{calc}$ ;
- Etape B4 : si $|\Delta\sigma|_1$ et/ou $|\Delta\sigma|_2$ est inférieure ou égale à x % de la conductivité $\sigma_{111}$ du point 111, alors on sélectionne un point d'entrée pour lequel la valeur $|\Delta\sigma|$ est la plus petite et on attribue au point 111 pour la date $t_{calc}$ les valeurs des concentration en composés chimiques relevées audit point d'entrée à la date $t_{relevé}$ la plus proche de la date de calcul $t_{calc}$ ;

- Etape $B4_{bis}$ : sinon, on calcule les quotients de pondération $\frac{|\Delta\sigma|_1}{\sigma 11}$ et $\frac{|\Delta\sigma|_2}{\sigma 21}$ et on attribue au point courant 111 pour la date $t_{calc}$, et pour chaque composé chimique dont la concentration dans l'eau est connue aux point d'entrées 11 et 21, une valeur de concentration $C_{111}$ égale à $\frac{|\Delta\sigma|_1}{\sigma 11} \times C_{11} + \frac{|\Delta\sigma|_2}{\sigma 21} \times C_{21}$ où $C_{11}$ est la concentration dudit composé chimique dans l'eau relevée au point d'entrée 11 à la date $t_{relevé}$ la plus proche de la date de calcul $t_{calc}$ et $C_{21}$ est la concentration dudit composé chimique dans l'eau relevée au point d'entrée 21 à la date $t_{relevé}$ la plus proche de la date de calcul $t_{calc}$ ;
- Etape B5 (étape DEGRAD) : calcul des indices de dégradation ID permettant de qualifier les interactions entre l'eau et les matériaux aux points 11, 21 et 111 :
- Etape B6 (option) : application des étapes B1 à B5 précédentes pour une seconde date de calcul $t_{calc}$ à laquelle les données sont complètes au point 111.

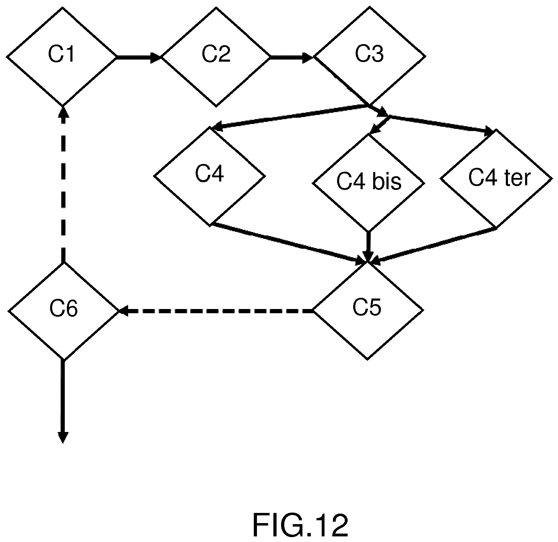

La figure 12 illustre le cas où le point courant 112 est associé à plus de deux points d'entrée 12, 22, 32.

- Etape C1 : pour une période de calcul sélectionnée $\Delta t_{calc}$, sélection d'une première date de calcul $t_{calc}$ comprise dans la période $\Delta t_{calc}$ et à laquelle les données courantes sont complètes au point 112 ;
- Etape C2 : sélection, pour chaque point d'entrée 12, 22, 32, d'au moins une date de relevé $t_{relevé}$ antérieure à la première date de calcul $t_{calc}$ sélectionnée à l'étape C1 et pour laquelle les données d'entrée sont complètes (de préférence la date de relevé $t_{relevé}$ de chaque point d'entrée est choisie pour être la plus proche possible de la date de calcul $t_{calc}$) ;
- Etape C3 : calcul, pour chaque point d'entrée, de la valeur absolue $|\Delta\sigma|_1$(resp $|\Delta\sigma|_2$, $|\Delta\sigma|_3$) de la différence entre la conductivité $\sigma_{12}$ (resp $\sigma_{22}$, resp $\sigma_{23}$) du point d'entrée 12 (resp 22, 32) à la date $t_{relevé}$ et la conductivité $\sigma_{112}$ du point courant 112 à la date $t_{calc}$ ;
- Etape C4 : si $|\Delta\sigma|_1$ et/ou $|\Delta\sigma|_2$ et/ou $|\Delta\sigma|_3$ est inférieure ou égale à x % de la conductivité $\sigma_{112}$ du point 112, alors on sélectionne un point d'entrée 12, 22, 32 pour lequel la valeur $|\Delta\sigma|$ est la plus petite et on attribue au point 112 pour la date $t_{calc}$ les valeurs des concentration en composés chimiques relevées audit point d'entrée sélectionné à la date $t_{relevé}$ la plus proche de la date de calcul $t_{calc}$, sinon :
- Etape $C4_{bis}$ : on calcule les quotients de pondération $\frac{|\Delta\sigma|_1}{\sigma 12}$ , $\frac{|\Delta\sigma|_2}{\sigma 22}$ et $\frac{|\Delta\sigma|_3}{\sigma 32}$ et on attribue au point courant 112 pour la date $t_{calc}$, et pour chaque composé chimique dont la concentration dans l'eau est connue aux point d'entrées 12, 22 et 32, une valeur de concentration $C_{112}$ égale à $\frac{|\Delta\sigma|_1}{\sigma 12} \times C_{12} + \frac{|\Delta\sigma|_2}{\sigma 22} \times C_{22} + \frac{|\Delta\sigma|_2}{\sigma 32} \times C_{32}$ , où $C_{12}$ est la concentration dudit composé chimique dans l'eau relevée au point d'entrée 12 à la date $t_{relevé}$ la plus proche de la date de calcul $t_{calc}$, $C_{22}$ est la concentration dudit composé chimique dans l'eau relevée au point d'entrée 22 à la date $t_{relevé}$ la plus proche de la date de calcul $t_{calc}$ et $C_{32}$ est la concentration dudit composé chimique dans l'eau relevée au point d'entrée 32 à la date $t_{relevé}$ la plus proche de la date de calcul $t_{calc}$ ; ou :
- Etape $C4_{ter}$ : on analyse l'écoulement hydraulique pour associer le point courant 112 au point d'entrée 12 le plus proche hydrauliquement et on reporte au point 112 pour la date $t_{calc}$ les valeurs des concentrations en éléments relevées audit point d'entrée 12 à la date $t_{relevé}$ la plus proche de la date de calcul $t_{calc}$ (cas de la figure 10) ;
- Etape C5 (étape DEGRAD) : calcul des indices de dégradation ID permettant de qualifier les interactions entre l'eau et les matériaux aux points 12, 22, 32 et 112 ;
- Etape C6 (option) : application des étapes C1 à C5 précédentes pour une seconde date de calcul $t_{calc}$ à laquelle les données sont complètes au point courant 112.

Alternativement aux valeurs des concentrations en composés chimiques relevées audit point d'entrée à la date $t_{relevé}$ la plus proche de la date de calcul $t_{calc}$, on peut prendre une valeur moyenne des concentrations en composés chimiques relevées en plusieurs dates de relevés $t_{relevé}$, chaque date de relevé étant antérieure ou égale à la date de calcul $t_{calc}$.

Une étape de vérification VERIF d'au moins un indice de dégradation ID calculé peut être réalisée postérieurement à l'étape de calcul de l'indice DEGRAD de dégradation. Elle comprend :

- une étape de mesure de grandeurs de dégradation dudit système en au moins un point courant 110 ;

- une étape de comparaison des grandeurs de dégradation mesurées avec les indices de dégradation ID calculés en ledit au moins un point courant lors de l'étape de calcul DEGRAD.

Cette étape permet un contrôle des informations produites sur la base des calculs précédents basés sur les interactions eaux/matériaux du réseau et fournissant des indicateurs calculés, correspondant à des risques théoriques, avec des grandeurs mesurées qui donnent des indicateurs de dégradation réels.

Ces grandeurs mesurées peuvent être issues de registres d'événements de détérioration de la qualité de l'eau (analyses eau, plaintes client), de résultats des diagnostics et/ou autopsies sur le réseau, par exemple sur des conduites.

Cela peut en outre être enrichi par des analyses de l'environnement proche du réseau, par exemple sur le sol entourant les conduites.

Pour chaque point courant et/ou chaque zone définie dans l'étape de zonage ZONAG, des indicateurs de dégradation calculés sont comparés avec les indicateurs de l'état de dégradation réel.

Cette étape de vérification VERIF peut être suivie d'une étape de recalage RECAL de l'indice de dégradation calculé, en utilisant les grandeurs de dégradation dudit système mesurées en au moins un point courant lors de l'étape de vérification (VERIF).

Les différents modes présentés peuvent être combinés entre eux.

Ainsi, le procédé selon l'invention permet de qualifier, voire de prévoir, l'état de dégradation des conduites de distribution et les conséquences sur la durée de vie du patrimoine et la qualité de l'eau.

Le procédé selon l'invention permet en outre d'intervenir pour éviter une dégradation, ou pour éviter qu'une dégradation n'empire.

Ainsi, le procédé peut comprendre des étapes d'intervention sur le système de distribution d'eau, et/ou sur l'eau pour éviter une dégradation, ou d'éviter qu'une dégradation n'empire.

Les deux exemples ci-dessous, non limitatifs, illustrent deux modes d'intervention envisageables.

Exemple 1 : en fonction des indices de dégradation calculés en un point du réseau, une consigne de correction de la qualité de l'eau, et notamment du pH, est transmise à un ou plusieurs automates ou à un ou plusieurs opérateurs dans une ou plusieurs usines en amont dudit point. Cette consigne pourrait se traduire par une correction au niveau d'un point d'entrée. La consigne peut alors se traduire par l'ajout d'une dose de réactifs adaptée. Il peut s'agir d'une dose en un acide ou en soude.

Exemple 2 : en fonction des indices de dégradation calculés en un ou des points du réseau (ou dans une ou des zones), une consigne d'exploitation des différentes ressources d'eau alimentant ledit point est transmise à un ou plusieurs automates ou à un ou plusieurs opérateurs pour adapter la qualité de l'eau au niveau des points d'entrée alimentant le ou les points (ou une ou des zones) présentant des indices de dégradation au-dessus de seuils prédéfinis. Cette consigne pourrait se traduire par la mise en route préférentielle de certains forages ou usines qui alimentent lesdits points ou lesdites zones.

Le procédé peut être implémenté via un logiciel. Il peut ainsi être distribué en tant que service dans le Cloud, compatible en consultation et/ou en alimentation. Plusieurs niveaux de droit d'accès peuvent être gérés. Le logiciel peut être installé dans un ordinateur, une tablette, un smartphone.

Ainsi, le logiciel implémentant le procédé peut comprendre plusieurs modules, chaque module étant apte à réaliser tout ou partie des étapes suivantes :

- l'intégration et la structuration de données géo-localisées sur le réseau de distribution, et/ou de données sur la qualité de l'eau, et/ou de données sur le sol ;
- la création de zones du réseau de distribution ;
- la détermination de données de paramètres de l'eau manquantes en des points et/ou en des zones, en fonction de données préalablement intégrées et structurées (algorithmes de calcul) ;
- le calcul, pour des points et/ou des zones, de cinétiques de dégradation interne et externe du réseau de distribution, basées sur des calculs d'interactions eaux/matériaux, sols/matériaux et sur les données préalablement intégrées et déterminées.
- le calcul, pour des points et/ou des zones, de la durée de vie théorique du réseau de distribution et des risques théoriques de dégradation de la qualité de l'eau ;
- la comparaison des résultats générés sur la base des calculs d'interactions eaux/matériaux (risques théoriques) avec des mesures de l'état réel du réseau et/ou des registres d'événements de détérioration de la qualité de l'eau ;
- la comparaison des résultats générés sur la base des calculs d'interactions sols/matériaux (risques théoriques) avec des mesures de l'état réel du réseau et/ou des registres d'événements de détérioration de la qualité de l'eau ;
- l'identification sur l'ensemble du réseau de distribution des zones critiques, dans lesquelles il peut y avoir des risques de casses et de détérioration de la qualité de l'eau transportée ;
- la notification aux utilisateurs par mécanismes d'affichage significatifs d'un état de risque ou état critique ;
- la comparaison des indicateurs d'un réseau à l'autre (fonction benchmarking) à l'échelle d'un périmètre spécifique (pays, société) ou du périmètre global de l'application (base mondiale).

En outre, la présente invention n'est pas limitée aux modes de réalisation précédemment décrits mais s'étend à tout mode de réalisation entrant dans la portée des revendications.

## Revendications

1. Procédé de détermination de paramètres aptes à renseigner sur l'état d'un système (100) de distribution d'eau comprenant au moins une conduite (2) apte à transporter de l'eau (3), le procédé comprenant les étapes suivantes :

   - une étape d'importation (IMPORT) apte à importer sur un calculateur (C) des valeurs d'entrée (VE) d'au moins un paramètre de l'eau préalablement mesuré, relevées en au moins un point d'entrée (10) du système (100) de distribution d'eau et sur une période de relevé ($\Delta t_{relevé}$) comprenant au moins une date de relevé ($t_{relevé}$) ;
   - une étape de sélection (SELECT) apte à sélectionner au moins un point courant (110) ;
   - une étape d'association (ASSO) apte à associer ledit point courant avec au moins un point d'entrée (10) dans le système (100) de distribution d'eau ;
   - une étape de détermination (DETER) apte à déterminer une valeur courante (VC) dudit au moins un paramètre de l'eau au point courant (110) à partir de valeurs d'entrée (VE) audit au moins un point d'entrée (10) associé au point courant (110).

2. Procédé selon la revendication 1, l'étape de détermination (DETER) comprenant les étapes suivantes :

   - si le point courant (110) est associé à un seul point d'entrée (10), alors on attribue à la valeur courante (VC) d'au moins un paramètre de l'eau la valeur moyenne temporelle des valeurs d'entrée (VE) dudit paramètre ;
   - si le point courant (111) est associé à au moins deux points d'entrée (11, 21), alors

     o soit on calcule la moyenne temporelle des valeurs d'entrée (VE) d'au moins un paramètre de l'eau pour chaque point d'entrée (11, 21) associé audit point courant, on pondère chaque moyenne temporelle calculée par un premier coefficient de pondération ($y_{11}$, $y_{21}$), et on attribue à la valeur courante (VC) dudit paramètre une valeur égale à la somme des moyennes temporelles pondérées de tous les points d'entrée, la somme des premiers coefficients de pondération ($y_{11}$, $y_{21}$) étant égale à 1 ;
     o soit on attribue à la valeur courante (VC) d'au moins un paramètre de l'eau la valeur moyenne temporelle des valeurs d'entrée (VE) dudit paramètre au point d'entrée (11) hydrauliquement le plus proche du point courant (111) ;

   la moyenne temporelle des valeurs d'entrée (VE) d'un paramètre de l'eau étant la moyenne desdites valeurs d'entrée sur une période de calcul ($\Delta t_{calc}$) comprenant au moins une date de relevé ($t_{relevé}$).

3. Procédé selon la revendication 1, comprenant en outre une étape de mesure (MESUR) d'au moins un paramètre courant mesuré en au moins un point courant (110) au cours d'une période de mesure ($\Delta t_{mesur}$), l'étape de détermination (DETER) étant réalisée à partir de valeurs d'entrée (VE) audit au moins un point d'entrée associé au point courant (110) et dudit au moins un paramètre courant mesuré, la période de mesure ($\Delta t_{mesur}$) comprenant au moins une date de mesure ($t_{mesur}$), postérieure ou égale à la période de relevé ($\Delta t_{relevé}$).

4. Procédé selon la revendication 3, un paramètre de l'eau étant la valeur de la conductivité de l'eau et un paramètre courant mesuré étant la conductivité courante de l'eau mesurée en un point courant (110) à la date de mesure ($t_{mesur}$).

5. Procédé selon la revendication 4, l'étape de détermination (DETER) comprenant les étapes suivantes :

   - si le point courant (110) est associé à un seul point d'entrée (10), et :

     o si la valeur absolue de l'écart entre la conductivité courante et la conductivité d'entrée est inférieure ou égale à un pourcentage x de la conductivité courante alors on attribue à la valeur courante (VC) d'au moins un paramètre de l'eau la ou les valeurs d'entrée (VE) dudit paramètre relevées à la date de relevé ($t_{relevé}$) antérieur et temporellement le plus proche de la date de mesure ($t_{mesur}$) ou égale à ladite date de mesure ;
     o si la valeur absolue de l'écart entre la conductivité courante et la conductivité d'entrée est supérieure à un pourcentage x de la conductivité courante alors on attribue à la valeur courante (VC) d'au moins un paramètre de l'eau la moyenne temporelle des valeurs d'entrée (VE) dudit paramètre ;

- si le point courant (111) est associé à au moins deux points d'entrée (11, 21) et :

◦ si la valeur absolue de chaque écart entre la conductivité courante et la conductivité d'entrée en chaque point d'entrée associé audit point courant est inférieur ou égale à un pourcentage x de la conductivité courante alors on attribue à la valeur courante (VC) d'au moins un paramètre de l'eau la moyenne temporelle des valeurs d'entrée (VE) dudit paramètre au point d'entrée (11) en lequel la conductivité d'entrée de l'eau est la plus proche de la conductivité courante de l'eau ;
◦ si la valeur absolue d'au moins un écart entre la conductivité courante et la conductivité d'entrée en chaque point d'entrée (11, 21) associé audit point courant est supérieure à un pourcentage x de la conductivité courante alors :

▪ **soit** on calcule la moyenne temporelle des valeurs d'entrée (VE) d'au moins un paramètre de l'eau pour chaque point d'entrée (11, 21), on pondère la moyenne temporelle calculée pour chaque point d'entrée (11, 12) par un second coefficient de pondération ($z_{11}$, $z_{12}$) fonction du rapport entre la conductivité d'entrée de l'eau en ledit point d'entrée et la conductivité courante, et on attribue à la valeur courante (VC) dudit paramètre une valeur égale à la somme des moyennes temporelles pondérées ; la somme desdits seconds coefficients ($z_{11}$, $z_{12}$) étant égale à 1 ;
▪ **soit** on attribue à la valeur courante (VC) d'au moins un paramètre de l'eau la moyenne temporelle des valeurs d'entrée (VE) dudit paramètre au point d'entrée (11) hydrauliquement le plus proche du point courant (111) ;

la valeur moyenne temporelle des valeurs d'entrée (VE) dudit paramètre étant la moyenne desdites valeurs d'entrée sur une période de calcul ($\Delta t_{calc}$) comprenant au moins une date de relevé $t_{relevé}$ et une date de mesure $t_{mesur}$, la date de relevé étant antérieure ou égale à la date de mesure ; et la valeur du pourcentage x étant définie en fonction de la précision souhaitée.

6. Procédé selon la revendication 5, selon lequel, si le point courant (110) est associé à un seul point d'entrée (10), et si la valeur absolue de l'écart entre la conductivité courante et la conductivité d'entrée est supérieure à un pourcentage x de la conductivité courante, alors on attribue à la valeur courante (VC) d'au moins un paramètre de l'eau la moyenne temporelle des valeurs d'entrée (VE) dudit paramètre, pondérée par le rapport entre la conductivité d'entrée de l'eau et la conductivité courante de l'eau pondérée par le rapport entre la conductivité d'entrée de l'eau et la conductivité courante de l'eau.

7. Procédé selon l'une des revendications précédentes comprenant une étape de zonage (ZONAG) du système (100) de distribution d'eau apte à définir plusieurs zones (101, 102, 103), une zone comprenant au moins un point courant (100, 111, 112) associé au moins un point d'entrée (10, 11, 21, 12, 22, 32, 13).

8. Procédé selon l'une des revendications précédentes comprenant en outre une étape de calcul (DEGRAD) d'au moins un indice de dégradation (ID) en au moins un point courant (110, 111, 112) à partir d'au moins une valeur courante (VC) de paramètres de l'eau audit au moins un point courant déterminée lors de l'étape de détermination (DETER).

9. Procédé selon la revendication 8, l'étape de calcul (DEGRAD) d'au moins un indice de dégradation (ID) en au moins un point courant étant réalisée également à partir d'un paramètre courant mesuré audit point courant.

10. Procédé selon la revendication 9, un paramètre courant mesuré en au moins un point courant (110, 111, 112) étant le pH de l'eau, l'étape de calcul (DEGRAD) d'au moins un indice de dégradation comprenant les étapes suivantes :

- une étape de calcul d'un pH d'équilibre ($pH_S$) de l'eau à partir de valeurs courantes (VC) de concentration de composés chimiques dans l'eau déterminées en ledit point courant (110, 111, 112) puis ;
- une étape de comparaison du pH et du pH d'équilibre ($pH_S$) en ledit point courant puis ;
- une étape de déduction d'un indice de dégradation (ID) du système (100) de distribution d'eau en ledit point courant (110, 111, 112).

11. Procédé selon la revendication 8, le au moins un paramètre de l'eau comprenant au moins la concentration de l'eau en chlorures et/ou en sulfates, et l'étape de calcul (DEGRAD) d'au moins un indice de dégradation comprenant une étape de déduction d'un indice de dégradation du système (100) de distribution d'eau en au moins un point courant (110, 111, 112) en fonction de valeurs courantes (VC) déterminées en ledit point courant d'au moins une concentration de l'eau en chlorures et/ou en sulfates déterminées.

12. Procédé selon la revendication 8, l'étape de calcul (DEGRAD) d'au moins un indice de dégradation comprenant l'utilisation d'un indice de corrosion (CI) apte à calculer une vitesse de corrosion et d'un indice d'émission de particules (PRI) apte à renseigner sur la qualité de l'eau en au moins un point courant (110, 111, 112).

13. Procédé selon la revendication 12, comprenant une étape d'estimation (ESTIM) de la durée de vie d'au moins une conduite (2) du système de distribution (100) en combinant au moins un indice de dégradation (ID) avec des données du système (100) de distribution d'eau.

14. Procédé selon la revendication 13 en combinaison avec la revendication 7, comprenant en outre une étape de définition (CRITIC) de zones critiques parmi les zones définies lors de l'étape de zonage (ZONAG) du système (100).

15. Procédé selon l'une des revendications 8 à 14 comprenant en outre une étape de vérification (VERIF) d'au moins un indice de dégradation (ID) du système (100) de distribution d'eau comprenant :

   - une étape de mesure de grandeurs de dégradation dudit système en au moins un point (10, 110) du système (100) de distribution ;
   - une étape de comparaison des grandeurs de dégradation mesurées avec les indices de dégradation (ID) calculés en ledit au moins un point lors de l'étape de calcul (DEGRAD) ;

   suivie d'une étape de recalage (RECAL) du au moins un indice de dégradation (ID) du système (100) de distribution d'eau, en utilisant les grandeurs de dégradation dudit système mesurées lors de l'étape de vérification (VERIF).

16. Procédé selon l'une des revendications 8 à 15, comprenant en outre une étape d'envoi à un système de pilotage d'au moins un indice de dégradation calculé et/ou recalé, le système de pilotage étant apte agir sur le système de distribution d'eau et/ou l'eau de manière à corriger l'état dudit système de distribution d'eau.

17. Procédé selon la revendication 16, l'étape de correction consistant en l'ajout d'un ou de plusieurs réactifs dans l'eau, la quantité d'un réactif étant calculée par le système de pilotage en fonction d'au moins un indice de dégradation calculé et/ou recalé.

**Patentansprüche**

1. Verfahren zum Bestimmen von Parametern, die Informationen über den Zustand eines Wasserverteilungssystems (100) liefern können, das mindestens ein Rohr (2) umfasst, das Wasser (3) transportieren kann, wobei das Verfahren die folgenden Schritte umfasst:

   - einen Importierschritt (IMPORT), der auf einem Rechner (C) Eingangswerte (VE) von mindestens einem zuvor gemessenen Parameter des Wassers importieren kann, abgelesen an mindestens einem Eingangspunkt (10) des Wasserverteilungssystems (100) und über eine Ableseperiode ($\Delta t_{Ablesen}$), die mindestens einen Ablesezeitpunkt ($t_{Ablesen}$) umfasst;
   - einen Auswahlschritt (SELECT), der zur Auswahl mindestens eines aktuellen Punktes (110) eingerichtet ist;
   - einen Assoziierungsschritt (ASSO), der zum Assoziieren des aktuellen Punktes mit mindestens einem Eingangspunkt (10) in dem Wasserverteilungssystem (100) eingerichtet ist;
   - einen Bestimmungsschritt (DETER), der zum Bestimmen eines aktuellen Werts (VC) des mindestens einen Parameters des Wassers an dem aktuellen Punkt (110) anhand von Eingangswerten (VE) an dem mindestens einen mit dem aktuellen Punkt (110) assoziierten Eingangspunkt (10) eingerichtet ist.

2. Verfahren nach Anspruch 1, wobei der Bestimmungsschritt (DETER) die folgenden Schritte umfasst:

   - wenn der aktuelle Punkt (110) mit einem einzigen Eingangspunkt (10) assoziiert ist, Zuordnen des zeitlichen Mittelwertes der Eingangswerte (VE) des Parameters zu dem aktuellen Wert (VC) von mindestens einem Parameter des Wassers;
   - wenn der aktuelle Punkt (111) mit mindestens zwei Eingangspunkten (11, 21) assoziiert ist, dann:

◦ entweder Berechnen des zeitlichen Mittels der Eingangswerte (VE) von mindestens einem Parameter des Wassers für jeden mit dem aktuellen Punkt assoziierten Eingangspunkt (11, 21), Gewichten jedes berechneten zeitlichen Mittels mit einem ersten Gewichtungskoeffizienten ($y_{11}$, $y_{21}$) und Zuordnen eines Wertes zum aktuellen Wert (VC) des Parameters, der gleich der Summe der gewichteten zeitlichen Mittel aller Eingangspunkte ist, wobei die Summe der ersten Gewichtungskoeffizienten ($y_{11}$, $y_{21}$) gleich 1 ist;
◦ oder Zuordnen des zeitlichen Mittelwertes der Eingangswerte (VE) des Parameters zu dem aktuellen Wert (VC) von mindestens einem Parameter des Wassers an dem Eingangspunkt (11), der dem aktuellen Punkt (111) hydraulisch am nächsten liegt;

wobei das zeitliche Mittel der Eingangswerte (VE) eines Parameters des Wassers das Mittel der Eingangswerte über eine Berechnungsperiode ($\Delta t_{Berechn.}$) ist, die mindestens einen Ablesezeitpunkt ($t_{Ablesen}$) umfasst.

3. Verfahren nach Anspruch 1, das ferner einen Schritt des Messens (MESUR) von mindestens einem aktuellen Parameter umfasst, gemessen an mindestens einem aktuellen Punkt (110) während einer Messperiode ($\Delta t_{mesur}$), wobei der Bestimmungsschritt (DETER) anhand von Eingangswerten (VE) an dem mindestens einen mit dem aktuellen Punkt (110) assoziierten Eingangspunkt und anhand des mindestens einen gemessenen aktuellen Parameters durchgeführt wird, wobei die Messperiode ($\Delta t_{mesur}$) mindestens einen Messzeitpunkt ($t_{mesur}$) umfasst, der in oder nach der Ableseperiode ($\Delta t_{Ablesen}$) liegt.

4. Verfahren nach Anspruch 3, wobei ein Parameter des Wassers der Wert der Leitfähigkeit des Wassers ist und ein gemessener aktueller Parameter die an einem aktuellen Punkt (110) zum Messzeitpunkt ($t_{mesur}$) gemessene aktuelle Leitfähigkeit des Wassers ist.

5. Verfahren nach Anspruch 4, wobei der Bestimmungsschritt (DETER) die folgenden Schritte umfasst:

- wenn der aktuelle Punkt (110) mit einem einzigen Eingangspunkt (10) assoziiert ist, und:

◦ wenn der Absolutwert der Differenz zwischen der aktuellen Leitfähigkeit und der Eingangsleitfähigkeit genauso groß wie oder kleiner als ein Prozentsatz x der aktuellen Leitfähigkeit ist, dann Zuordnen der ein oder mehreren Eingangswerte (VE) des Parameters, die zum Zeitpunkt ($t_{relevé}$) des vor dem Messzeitpunkt ($t_{mesur}$) und diesem zeitlich am nächsten liegenden Ablesens, oder der gleich diesem Messzeitpunkt ist, abgelesen werden, zu dem aktuellen Wert (VC) von mindestens einem Wasserparameter;
◦ wenn der Absolutwert der Differenz zwischen der aktuellen Leitfähigkeit und der Eingangsleitfähigkeit größer ist als ein Prozentsatz x der aktuellen Leitfähigkeit, dann Zuordnen des zeitlichen Mittels der Eingangswerte (VE) des Parameters zu dem aktuellen Wert (VC) von mindestens einem Parameter des Wassers;

- wenn der aktuelle Punkt (111) mit mindestens zwei Eingangspunkten (11, 21) assoziiert ist, und:

◦ wenn der Absolutwert jeder Differenz zwischen der aktuellen Leitfähigkeit und der Eingangsleitfähigkeit an jedem mit dem aktuellen Punkt assoziierten Eingangspunkt genauso groß wie oder kleiner als ein Prozentsatz x der aktuellen Leitfähigkeit ist, dann Zuordnen des zeitlichen Mittels der Eingangswerte (VE) des Parameters zu dem aktuellen Wert (VC) von mindestens einem Parameter des Wassers am Eingangspunkt (11), an dem die Eingangsleitfähigkeit des Wassers der aktuellen Leitfähigkeit des Wassers am nächsten liegt;
◦ wenn der Absolutwert von mindestens einer Differenz zwischen der aktuellen Leitfähigkeit und der Eingangsleitfähigkeit an jedem mit dem aktuellen Punkt assoziierten Eingangspunkt (11, 21) größer ist als ein Prozentsatz x der aktuellen Leitfähigkeit, dann

▪ **entweder** Berechnen des zeitlichen Mittels der Eingangswerte (VE) von mindestens einem Parameter des Wassers für jeden Eingangspunkt (11, 21), Gewichten des für jeden Eingangspunkt (11, 12) berechneten zeitlichen Mittels mit einem zweiten Gewichtungskoeffizienten ($z_{11}$, $z_{12}$) in Abhängigkeit von dem Verhältnis zwischen der Eingangsleitfähigkeit des Wassers am Eingangspunkt und der aktuellen Leitfähigkeit, und Zuordnen eines Wertes von gleich der Summe der gewichteten zeitlichen Mittel zu dem aktuellen Wert (VC) des Parameters; wobei die Summe der zweiten Koeffizienten ($Z_{11}$, $Z_{12}$) gleich 1 ist;
▪ **oder** Zuordnen des zeitlichen Mittels der Eingangswerte (VE) des Parameters zu dem aktuellen Wert (VC) von mindestens einem Parameter des Wassers an dem Eingangspunkt (11), der dem aktuellen Punkt (111) hydraulisch am nächsten liegt;

wobei der zeitliche Mittelwert der Eingangswerte (VE) des Parameters das Mittel der Eingangswerte über eine Berechnungsperiode ($\Delta t_{Berechn.}$) ist, die mindestens einen Ablesezeitpunkt $t_{Ablesen}$ und einen Messzeitpunkt $t_{mesur}$ umfasst, wobei der Ablesezeitpunkt vor oder auf dem Messzeitpunkt liegt; und
der Wert des Prozentsatzes x in Abhängigkeit von der gewünschten Genauigkeit definiert ist.

6. Verfahren nach Anspruch 5, wobei, wenn der aktuelle Punkt (110) mit einem einzigen Eingangspunkt (10) assoziiert ist und wenn der Absolutwert der Differenz zwischen der aktuellen Leitfähigkeit und der Eingangsleitfähigkeit größer ist als ein Prozentsatz x der aktuellen Leitfähigkeit, dann Zuordnen des zeitlichen Mittels der Eingangswerte (VE) des Parameters zu dem aktuellen Wert (VC) von mindestens einem Parameter des Wassers, gewichtet mit dem Verhältnis zwischen der Eingangsleitfähigkeit des Wassers und der aktuellen Leitfähigkeit des Wassers, gewichtet mit dem Verhältnis zwischen der Eingangsleitfähigkeit des Wassers und der aktuellen Leitfähigkeit des Wassers.

7. Verfahren nach einem der vorhergehenden Ansprüche, das einen Schritt der Zoneneinteilung (ZONAG) des Wasserverteilungssystems (100) umfasst, der zum Definieren mehrerer Zonen (101, 102, 103) eingerichtet ist, wobei eine Zone mindestens einen mit mindestens einem Eingangspunkt (10, 11, 21, 12, 22, 32, 13) assoziierten aktuellen Punkt (100, 111, 112) umfasst.

8. Verfahren nach einem der vorhergehenden Ansprüche, das ferner einen Schritt des Berechnens (DEGRAD) mindestens eines Degradationsindexes (ID) an mindestens einem aktuellen Punkt (110, 111, 112) auf der Basis von mindestens einem aktuellen Wert (VC) von Parametern des Wassers an dem mindestens einen aktuellen Punkt umfasst, der während des Bestimmungsschritts (DETER) bestimmt wurde.

9. Verfahren nach Anspruch 8, wobei der Schritt des Berechnens (DEGRAD) mindestens eines Degradationsindexes (ID) an mindestens einem aktuellen Punkt auch anhand eines an dem aktuellen Punkt gemessenen aktuellen Parameters durchgeführt wird.

10. Verfahren nach Anspruch 9, wobei ein an mindestens einem aktuellen Punkt (110, 111, 112) gemessener aktueller Parameter der pH-Wert des Wassers ist, wobei der Schritt des Berechnens (DEGRAD) mindestens eines Degradationsindexes die folgenden Schritte umfasst:

- einen Schritt des Berechnens eines Gleichgewichts-pH-Wertes ($pH_S$) des Wassers anhand von aktuellen Werten (VC) der Konzentration chemischer Verbindungen im Wasser, bestimmt an dem aktuellen Punkt (110, 111, 112), dann:
- einen Schritt des Vergleichens des pH-Wertes und des Gleichgewichts - pH-Wertes ($pH_S$) an dem aktuellen Punkt, dann:
- einen Schritt des Ableitens eines Degradationsindexes (ID) des Wasserverteilungssystems (100) an dem aktuellen Punkt (110, 111, 112).

11. Verfahren nach Anspruch 8, wobei der mindestens eine Parameter des Wassers mindestens die Chlorid- und/oder Sulfatkonzentration des Wassers umfasst und der Schritt des Berechnens (DEGRAD) mindestens eines Degradationsindexes einen Schritt des Ableitens eines Degradationsindexes des Wasserverteilungssystems (100) an mindestens einem aktuellen Punkt (110, 111, 112) in Abhängigkeit von an dem aktuellen Punkt bestimmten aktuellen Werten (VC) von mindestens einer bestimmten Chlorid- und/oder Sulfatkonzentration des Wassers umfasst.

12. Verfahren nach Anspruch 8, wobei der Schritt des Berechnens (DEGRAD) mindestens eines Degradationsindexes die Verwendung eines Korrosionsindexes (CI), der zum Berechnung einer Korrosionsrate eingerichtet ist, und eines Partikelemissionsindexes (PRI) umfasst, der Informationen über die Qualität des Wassers an mindestens einem aktuellen Punkt (110, 111, 112) liefern kann.

13. Verfahren nach Anspruch 12, das einen Schritt des Schätzens (ESTIM) der Lebensdauer von mindestens einem Rohr (2) des Verteilungssystems (100) durch Kombinieren mindestens eines Degradationsindexes (ID) mit Daten des Wasserverteilungssystems (100) umfasst.

14. Verfahren nach Anspruch 13 in Kombination mit Anspruch 7, das ferner einen Schritt des Definierens (CRITIC) kritischer Zonen unter den im Zonenunterteilungsschritt (ZONAG) des Systems (100) definierten Zonen beinhaltet.

15. Verfahren nach einem der Ansprüche 8 bis 14, das ferner einen Schritt des Verifizierens (VERIF) mindestens eines Degradationsindexes (ID) des Wasserverteilungssystems (100) umfasst:

   - einen Schritt des Messens von Degradationsgrößen des Systems an mindestens einem Punkt (10, 110) des Verteilungssystems (100);
   - einen Schritt des Vergleichens der gemessenen Degradationsgrößen mit den an dem mindestens einen Punkt während des Berechnungsschritts (DEGRAD) berechneten Degradationsindizes (ID);

   gefolgt von einem Schritt des Rekalibrierens (RECAL) des mindestens einen Degradationsindexes (ID) des Wasserverteilungssystems (100) unter Verwendung der während des Verifizierungsschritts (VERIF) gemessenen Degradationsgrößen des Systems.

16. Verfahren nach einem der Ansprüche 8 bis 15, das ferner einen Schritt des Sendens mindestens eines berechneten und/oder rekalibrierten Degradationsindexes an ein Steuersystem umfasst, wobei das Steuersystem auf das Wasserverteilungssystem und/oder das Wasser einwirken kann, um den Zustand des Wasserverteilungssystems zu korrigieren.

17. Verfahren nach Anspruch 16, wobei der Korrekturschritt im Zugeben von einem oder mehreren Reagenzien zu dem Wasser besteht, wobei die Menge eines Reagenz vom Steuersystem in Abhängigkeit von mindestens einem berechneten und/oder rekalibrierten Degradationsindex berechnet wird.

**Claims**

1. A method for determining parameters that can provide information on the state of a water distribution system (100) comprising at least one duct (2) capable of transporting water (3), the method comprising the following steps:

   - an import step (IMPORT) suitable for importing, to a computer (C), input values (VE) of at least one previously measured parameter of the water, recorded at at least one entry point (10) of the water distribution system (100) and over a recording period ($\Delta t_{recording}$) comprising at least one recording date ($t_{recording}$);
   - a selection step (SELECT) suitable for selecting at least one current point (110);
   - an association step (ASSO) suitable for associating said current point with at least one entry point (10) in the water distribution system (100);
   - a determination step (DETER) suitable for determining a current value (VC) of said at least one parameter of the water at the current point (110) from input values (VE) at said at least one entry point (10) associated with the current point (110).

2. The method according to claim 1, the determination step (DETER) comprising the following steps:

   - if the current point (110) is associated with a single entry point (10), then assigning to the current value (VC) of at least one parameter of the water the time average value of the input values (VE) of said parameter ;
   - if the current point (111) is associated with at least two entry points (11, 21), then

      ∘ either calculating the time average of the input values (VE) of at least one parameter of the water for each entry point (11, 21) associated with said current point, weighting each calculated time average by a first weighting coefficient ($y_{11}$, $y_{21}$), and assigning a value equal to the sum of the weighted time averages of all the entry points to the current value (VC) of the parameter , the sum of the first weighting coefficients ($y_{11}$, $y_{21}$) being equal to 1;
      ∘ or assigning to the current value (VC) of at least one parameter of the water the time average value of the input values (VE) of said parameter at the entry point (11) hydraulically closest to the current point (111);

   the time average of the input values (VE) of a parameter of the water being the average of said input values over a calculation period ($\Delta t_{calc}$) comprising at least one recording date ($t_{recording}$).

3. The method according to claim 1, also comprising a step of measurement (MESUR) of at least one current parameter measured at at least one current point (110) during a measurement period ($\Delta t_{mesur}$), the determination step (DETER) being performed on the basis of input values (VE) at said at least one entry point associated with the current point (110) and of said at least one measured current parameter, the measurement period ($\Delta t_{mesur}$) comprising at least

one measurement date ($t_{mesur}$), later than or equal to the recording period ($\Delta t_{recording}$).

4. The method according to claim 3, a parameter of the water being the value of the conductivity of the water and a measured current parameter being the current conductivity of the water measured at a current point (110) on the measurement date ($t_{mesur}$).

5. The method according to claim 4, the determination step (DETER) comprising the following steps:

- if the current point (110) is associated with a single entry point (10), and:

  ∘ if the absolute value of the difference between the current conductivity and the input conductivity is less than or equal to a percentage x of the current conductivity, then assigning to the current value (VC) of at least one parameter of the water the input value or values (VE) of said parameter recorded at the date of the recording ($t_{recording}$) that is earlier than and temporally closest to the measurement date ($t_{mesur}$), or equal to said measurement date;
  ∘ if the absolute value of the difference between the current conductivity and the input conductivity is greater than a percentage x of the current conductivity then assigning to the current value (VC) of at least one parameter of the water the time average of the input values (VE) of said parameter;

- if the current point (111) is associated with at least two entry points (11, 21) and:

  ∘ if the absolute value of each difference between the current conductivity and the input conductivity at each entry point associated with said current point is less than or equal to a percentage x of the current conductivity then assigning to the current value (VC) of at least one parameter of the water the time average of the input values (VE) of said parameter at the entry point (11) at which the input conductivity of the water is closest to the current conductivity of the water;
  ∘ if the absolute value of at least one difference between the current conductivity and the input conductivity at each entry point (11, 21) associated with said current point is greater than a percentage x of the current conductivity then:

    ▪ **either** calculating the time average of the input values (VE) of at least one parameter of the water for each entry point (11, 21), weighting the time average calculated for each entry point (11, 12) by a second weighting coefficient (z11, z12) that is a function of the ratio between the input conductivity of the water at said entry point and the current conductivity, and assigning to the current value (VC) of said parameter a value equal to the sum of the weighted time averages; the sum of said second coefficients (z11, z12) being equal to 1;
    ▪ **or** assigning to the current value (VC) of at least one parameter of the water the time average of the input values (VE) of said parameter at the entry point (11) hydraulically closest to the current point (111);

  the time average value of the input values (VE) of said parameter being the average of said input values over a calculation period ($\Delta t_{calc}$) comprising at least one recording date $t_{recording}$ and one measurement date $t_{mesur}$, the recording date being earlier than or equal to the measurement date; and
  the value of the percentage x being defined as a function of the desired accuracy.

6. The method according to claim 5, wherein, if the current point (110) is associated with a single entry point (10), and if the absolute value of the difference between the current conductivity and the input conductivity is greater than a percentage x of the current conductivity, then assigning to the current value (VC) of at least one parameter of the water the time average of the input values (VE) of said parameter, weighted by the ratio between the input conductivity of the water and the current conductivity of the water weighted by the ratio between the input conductivity of the water and the current conductivity of the water.

7. The method according to one of the preceding claims, comprising a step of zoning (ZONAG) the water distribution system (100) suitable for defining several zones (101, 102, 103), a zone comprising at least one current point (100, 111, 112) associated with at least one entry point (10, 11, 21, 12, 22, 32, 13).

8. The method according to one of the preceding claims, further comprising a step of calculation (DEGRAD) of at least one degradation index (ID) at at least one current point (110, 111, 112) from at least one current value (VC) of parameters of the water at said at least one current point determined in the determination step (DETER).

9. The method according to claim 8, the step of calculation (DEGRAD) of at least one degradation index (ID) at at least one current point being also performed on the basis of a current parameter measured at said current point.

10. The method according to claim 9, a current parameter measured at at least one current point (110, 111, 112) being the pH of the water, the step of calculation (DEGRAD) of at least one degradation index comprising the following steps:

    - a step of calculation of an equilibrium pH ($pH_S$) of the water on the basis of current values (VC) of concentration of chemical compounds in the water determined at said current point (110, 111, 112), then;
    - a step of comparison of the pH and of the equilibrium pH ($pH_S$) at said current point, then;
    - a step of deduction of a degradation index (ID) of the water distribution system (100) at said current point (110, 111, 112).

11. The method according to claim 8, the at least one parameter of the water comprising at least the chlorides and/or sulfates concentration of the water, and the step of calculation (DEGRAD) of at least one degradation index comprising a step of deduction of a degradation index of the water distribution system (100) at at least one current point (110, 111, 112) as a function of current values (VC) determined at said current point of at least one determined chlorides and/or sulfates concentration of the water.

12. The method according to claim 8, the step of calculation (DEGRAD) of at least one degradation index comprising the use of a corrosion index (CI) suitable for calculating a rate of corrosion and of a particle emission index (PRI) that can provide information on the quality of the water at at least one current point (110, 111, 112).

13. The method according to claim 12, comprising a step of estimation (ESTIM) of the lifetime of at least one duct (2) of the distribution system (100) by combining at least one degradation index (ID) with data on the water distribution system (100).

14. The method according to claim 13 in combination with claim 7, further comprising a step of definition (CRITIC) of critical zones from among the zones defined in the step of zoning (ZONAG) of the system (100).

15. The method according to one of claims 8 to 14, also comprising a step of verification (VERIF) of at least one degradation index (ID) of the water distribution system (100) comprising:

    - a step of measurement of degradation quantities of said system at at least one point (10, 110) of the distribution system (100);
    - a step of comparison of the measured degradation quantities with degradation indices (ID) calculated at said at least one point in the calculation step (DEGRAD);

    followed by a step of adjustment (RECAL) of at least one degradation index (ID) of the water distribution system (100), by using the degradation quantities of said system measured in the verification step (VERIF).

16. The method according to one of claims 8 to 15, further comprising a step of sending at least one calculated and/or adjusted degradation index to a control system, the control system being able to act on the water distribution system and/or the water so as to correct the state of said water distribution system.

17. The method according to claim 16, the correction step consisting in the addition of one or more reagents in the water, the quantity of a reagent being calculated by the control system as a function of at least one calculated and/or adjusted degradation index.

EP 3 721 022 B1

FIG.1

FIG.2

FIG.3

FIG.4

```
        ┌──────────────┐
        │              │
        │    IMPORT    │
        │              │
        └──────────────┘
               │
             ▽ VE ▽
        ┌──────────────┐
        │              │
        │    SELECT    │
        │              │
        └──────────────┘
               │
            ▽ 110 ▽
        ┌──────────────┐
        │              │
        │     ASSO     │
        │              │
        └──────────────┘
               │
            ▽ 10 ▽
        ┌──────────────┐
        │              │
        │    DETER     │
        │              │
        └──────────────┘
               │
              ▽
              VC
```

# FIG.5

IMPORT

↓ VE

SELECT

↓ 110

SYSTEM

↓ S

MODEL

↓ M

ASSO

↓ 10

DETER

↓ VC

FIG.6

IMPORT

⬇ VE

SELECT

⬇ 110

MESUR

⬇ P

ASSO

⬇ 10

DETER

⬇ VC

# FIG.7

FIG.8

IMPORT

↓ VE

SELECT

↓ 110,111,112

ASSO

↓ 10,11,12,22,32,13

ZONAG

↓ 101,102,103

DETER

↓ VC

DEGRAD

↓ ID

ESTIM

↓

CRITIC

FIG.9

FIG.10

FIG.11

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013121298 A
- WO 2013084068 A
- WO 2012098467 A
- WO 2011107864 A

- WO 2006073502 A
- WO 2010109117 A
- WO 2008148952 A
- WO 2010131001 A1

**Littérature non-brevet citée dans la description**

- **M. PHILIBERT et al.** Predicting the effect of water quality on water distribution cast iron and steel pipes using two novel indices. *Novel corrosion indices for iron and steel pipes Water Science & Technology: Water Supply,* 2017